(19) Europäisches Patentamt
European Patent Office
Office européen des brevets

(11) EP 4 692 196 A1

(12) EUROPEAN PATENT APPLICATION

(43) Date of publication:
**11.02.2026 Bulletin 2026/07**

(21) Application number: **25187773.4**

(22) Date of filing: **07.07.2025**

(51) International Patent Classification (IPC):
***C08K 3/04*** (2006.01) ***C08L 23/283*** (2025.01)

(52) Cooperative Patent Classification (CPC):
(C-Sets available)
**C08L 23/283; C08K 3/04** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **05.08.2024 JP 2024128772**

(71) Applicant: **SUMITOMO RUBBER INDUSTRIES, LTD.**
**Kobe-shi, Hyogo 651-0072 (JP)**

(72) Inventor: **MATSUI, Ryoji**
**Kobe-shi, 651-0072 (JP)**

(74) Representative: **TBK**
**Bavariaring 4-6**
**80336 München (DE)**

(54) **RUBBER COMPOSITION AND TIRE**

(57) Provided is a rubber composition and a tire that excel in overall performance in terms of hardness and crack growth resistance. The rubber composition contains a rubber component including a butyl-based rubber, a cyclic amine with a double bond in its ring, and a carbon black having a 24M4DBP oil absorption of 170 ml/100 g or more.

FIG.1

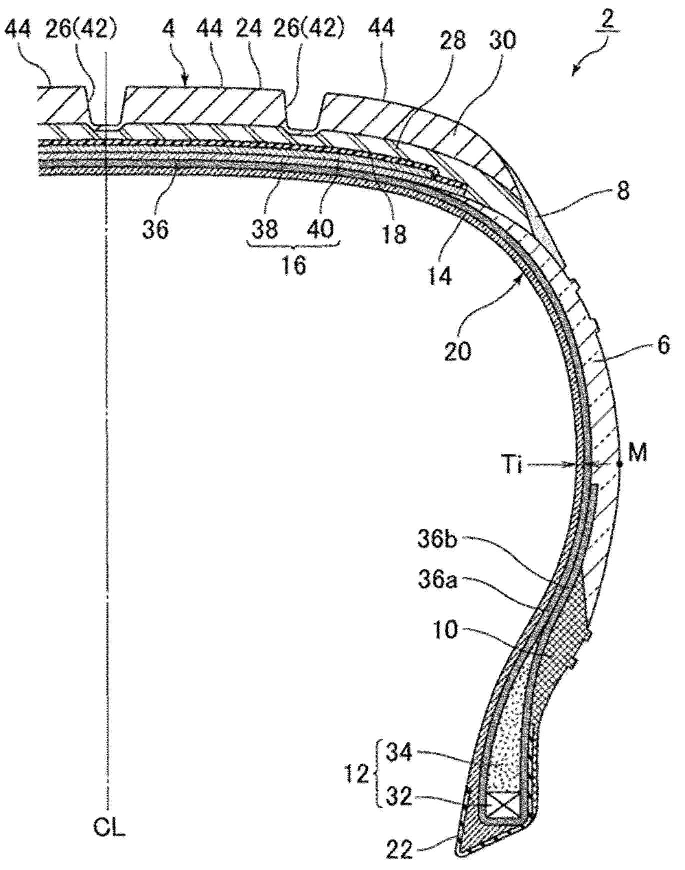




EP 4 692 196 A1

(52) Cooperative Patent Classification (CPC): (Cont.)

C-Sets
**C08K 3/04, C08K 5/378, C08K 5/09, C08K 3/22, C08K 3/06, C08K 5/47, C08K 5/47, C08L 23/283; C08L 23/283, C08K 3/04, C08K 5/378, C08K 5/09, C08K 3/22, C08K 3/06, C08K 5/47, C08K 5/47**

## Description

### TECHNICAL FIELD

The present invention relates to rubber compositions and tires.

### BACKGROUND ART

Tires are required to have various performances including fuel economy (see Patent Literature 1). Improvement of other properties such as hardness and crack growth resistance is also desired.

### CITATION LIST

### PATENT LITERATURE

Patent Literature 1: JP 2019-65240 A

### SUMMARY OF INVENTION

### TECHNICAL PROBLEM

The present invention aims to solve the problem and provide a resin composition and a tire that excel in overall performance in terms of hardness and crack growth resistance.

### SOLUTION TO PROBLEM

The present invention relates to a rubber composition, containing: a rubber component including a butyl-based rubber; a cyclic amine with a double bond in its ring; and a carbon black having a 24M4DBP oil absorption of 170 ml/100 g or more.

### ADVANTAGEOUS EFFECTS OF INVENTION

The rubber composition of the present invention contains a rubber component including a butyl-based rubber, a cyclic amine with a double bond in its ring, and a carbon black having a 24M4DBP oil absorption of 170 ml/100 g or more. This rubber composition can improve overall performance in terms of hardness and crack growth resistance.

### BRIEF DESCRIPTION OF DRAWINGS

FIG. 1 is a cross-sectional view showing a part of a pneumatic tire.
FIG. 2 is an enlarged cross-sectional view showing a tread and its vicinity of the tire in FIG. 1.

### DESCRIPTION OF EMBODIMENTS

The present embodiment relates to a rubber composition that contains a rubber component including a butyl-based rubber, a cyclic amine with a double bond in its ring, and a carbon black having a 24M4DBP oil absorption of 170 ml/100 g or more.

The reason for the above-described effects of the rubber composition is not exactly clear, but it is believed as follows.

The use of a combination of a cyclic amine with a double bond in its ring and a high structure carbon black having a 24M4DBP oil absorption of 170 ml/100 g or more causes interaction between the cations of the cyclic amine and the $\pi$ electrons on the surface of the carbon black, so that strong reversible bonds can be formed. As a result, as compared to the case of a usual formulation, favorable tensile properties and improved hardness can be achieved, presumably thereby improving crack growth resistance.

Presumably, the rubber composition thus can improve overall performance in terms of hardness and crack growth resistance.

The rubber composition contains a rubber component.

The rubber component contributes to crosslinking and generally corresponds to a polymer component which has a weight average molecular weight (Mw) of 10000 or more and which is not extractable with acetone. The rubber component is solid at room temperature (25°C).

The weight average molecular weight of the rubber component is preferably 50000 or more, more preferably 150000 or more, still more preferably 200000 or more, particularly preferably 270000 or more, while it is preferably 2000000 or less, more preferably 1500000 or less, still more preferably 1000000 or less. When the weight average molecular weight is within the range indicated above, the advantageous effects tend to be better achieved.

Herein, the weight average molecular weight (Mw) and the number average molecular weight (Mn) can be determined by gel permeation chromatography (GPC) (GPC-8000 series available from Tosoh Corporation, detector: differential refractometer, column: TSKgel SuperMultipore HZ-M available from Tosoh Corporation) and the determined values are calibrated with polystyrene standards.

The rubber component may be either an unmodified rubber or a modified rubber.

The modified rubber may be a rubber having a functional group interactive with fillers such as silica. Examples include a chain end-modified rubber obtained by modifying at least one chain end of a rubber with a compound (modifier) having the above functional group (i.e., a chain end-modified rubber terminated with the functional group); a backbone-modified rubber having the functional group in the backbone; a backbone- and chain end-modified rubber having the functional group in both the backbone and a chain end (e.g., a backbone- and chain end-modified rubber in which the backbone has the functional group and at least one chain end is modified with the modifier); and a chain end-modified rubber into which a hydroxy or epoxy group has been introduced by modification (coupling) with a polyfunctional compound having two or more epoxy groups in the molecule.

Examples of the functional group include an amino group, an amide group, a silyl group, an alkoxysilyl group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydroxyl group, an oxy group, and an epoxy group. These functional groups may be substituted. Preferred among these are amino groups (preferably amino groups whose hydrogen atom is replaced with a C1-C6 alkyl group), alkoxy groups (preferably C1-C6 alkoxy groups), and alkoxysilyl groups (preferably C1-C6 alkoxysilyl groups).

The rubber composition contains a butyl-based rubber as a rubber component.

Examples of the butyl-based rubber include butyl rubber; and halogenated butyl rubber such as chlorinated butyl rubber (Cl-IIR), brominated butyl rubber (Br-IIR), and fluorinated butyl rubber (F-IIR). Examples of usable commercial products of the butyl-based rubber include Exxpro butyl, Chlorobutyl HT1068, and Bromobutyl 2255 available from Exxon Mobil. The butyl-based rubber may be used alone or in combination of two or more thereof. To better achieve the advantageous effect, the butyl-based rubber preferably includes a halogenated butyl rubber, more preferably a brominated butyl rubber.

The butyl-based rubber may be either an unmodified butyl-based rubber or a modified butyl-based rubber.

Examples of the modified butyl-based rubber include modified butyl-based rubbers into which the functional groups listed for the modified rubbers have been introduced.

The amount of the butyl-based rubber based on 100% by mass of the rubber component in the rubber composition is preferably 10% by mass or more, more preferably 20% by mass or more, still more preferably 30% by mass or more, further preferably 50% by mass or more, further preferably 60% by mass or more, further preferably 70% by mass or more, and may be 100% by mass. When the amount is within the range indicated above, the advantageous effects tend to be better achieved.

The amount of the halogenated butyl-based rubber based on 100% by mass of the rubber component in the rubber composition is preferably 10% by mass or more, more preferably 20% by mass or more, still more preferably 30% by mass or more, further preferably 50% by mass or more, further preferably 60% by mass or more, further preferably 70% by mass or more, and may be 100% by mass. When the amount is within the range indicated above, the advantageous effects tend to be better achieved.

The rubber composition may contain a rubber component other than the butyl-based rubber.

Examples of the rubber component other than the butyl-based rubber include a diene-based rubber. Examples of the diene-based rubber include an isoprene-based rubber, polybutadiene rubber (BR), styrene-butadiene rubber (SBR), styrene-isoprene-butadiene rubber (SIBR), ethylenepropylene-diene rubber (EPDM), chloroprene rubber (CR), and acrylonitrile-butadiene rubber (NBR). Examples of the rubber component also include fluororubbers. Modified or hydrogenated products of these rubber components are also usable. Rubbers extended with oils, resins, liquid rubber components, or the like are usable as well. Of these, the rubber component preferably includes at least one of an isoprene-based rubber, BR, and SBR.

The raw materials (monomers) of synthetic rubbers such as IR, SBR, and BR may be derived from underground resources such as petroleum or natural gas or may be recycled from rubber products such as tires or non-rubber products such as polystyrene. Non-limiting examples of monomers obtained by recycle (recycled monomers) include isoprene

derived from recycled materials, butadiene derived from recycled materials, and aromatic vinyls derived from recycled materials. Examples of the butadiene include 1,2-butadiene and 1,3-butadiene. Non-limiting examples of the aromatic vinyls include styrene. Of these, isoprene derived from recycled materials (recycled isoprene), butadiene derived from recycled materials (recycled butadiene), and/or styrene derived from recycled materials (recycled styrene) are/is preferably used as a raw material.

The recycled monomers may be produced by any method. For example, a recycled monomer may be synthesized from naphtha derived from a recycled material that is obtained by decomposing a rubber product such as a tire. The naphtha derived from a recycled material may be produced by any method, for example, by decomposing a rubber product such as a tire at a high temperature and a high pressure, by microwave decomposition, or by mechanical grinding and subsequent extraction.

Further, the raw materials (monomers) of synthetic rubbers such as IR, SBR, and BR may be derived from biomass. Herein, the term "biomass" refers to substances derived from natural resources such as plants. Non-limiting examples of the biomass include agricultural, forestry and marine products, sugar, wood chips, plant residues after collecting useful components, plant-derived ethanol, and biomass naphtha.

Non-limiting examples of biomass-derived monomers (biomass monomers) include biomass-derived butadiene and biomass-derived aromatic vinyls. Examples of the butadiene include 1,2-butadiene and 1,3-bitadiene. Non-limiting examples of the aromatic vinyls include styrene. Biomass monomers may be produced by any method, for example, a method including at least one of biological conversion, chemical conversion, or physical conversion of an animal or a plant. The biological conversion is typically fermentation by microorganisms. The chemical and/or physical conversion can be caused by, for example, a catalyst, a high temperature, a high pressure, electromagnetic waves, a critical liquid, or a combination of these.

Non-limiting examples of polymers (biomass polymers) synthesized using a biomass monomer component include polybutadiene rubbers synthesized using biomass-derived butadiene and aromatic vinyl-butadiene copolymers synthesized using biomass-derived butadiene and/or a biomass-derived aromatic vinyl. Examples of the aromatic vinyl-butadiene copolymers include styrene-butadiene rubber synthesized using biomass-derived butadiene and/or biomass-derived styrene.

Whether the raw material of a polymer is derived from biomass can be judged by the percent Modern Carbon (pMC) measured in accordance with ASTM D6866-10.

The term "pMC" refers to the ratio of the $^{14}C$ content of a sample to the $^{14}C$ content of a modern carbon standard (modern standard reference). This value is used as an index indicative of the biomass ratio of a compound. The following will describe what this value means.

One mole of carbon atoms ($6.02 \times 10^{23}$ carbon atoms) includes about $6.02 \times 10^{11}$ $^{14}C$ atoms (about one trillionth of the number of normal carbon atoms). $^{14}C$ is called a radioactive isotope and its half-life period is 5730 years and the number thereof regularly decreases. Decay of all the $^{14}C$ atoms requires 226000 years. This means that in the fossil fuels, such as coal, petroleum, and natural gas, which are considered to be left for at least 226000 years after carbon dioxide and the like in the air were taken into and fixed in plants, or the like, all the $^{14}C$ atoms which had been contained in the plants or the like at the beginning of the fixation were decayed. Therefore, in the current 21st century, the fossil fuels, such as coal, petroleum, and natural gas, contain no $^{14}C$ atoms. Thus, chemical materials prepared from such fossil fuel raw materials contain no $^{14}C$ atoms either.

Meanwhile, $^{14}C$ is unceasingly generated by nuclear reaction of cosmic rays in the air, and this generation balances with the $^{14}C$ reduction due to radioactive decay. Thus, in the global atmosphere, the amount of $^{14}C$ is constant. Then, the $^{14}C$ content of materials derived from biomass resources which are circulating in the current environment is about $1 \times 10^{-12}$ mol% of the total of C atoms as described above. Therefore, a difference in the values can be used to calculate the biomass ratio of a compound.

The amount of $^{14}C$ is generally determined as follows. $^{13}C$ content ($^{13}C/^{12}C$) and $^{14}C$ content ($^{14}C/^{12}C$) are determined by tandem accelerator-based mass spectrometry. In the determination, the $^{14}C$ content of the natural carbon cycle at 1950 is used as a modern standard reference, that is, a standard $^{14}C$ content. The particular standard substance used is an oxalic acid standard offered by the National Institute of Standards and Technology (NIST), United States. The specific radioactivity of carbon (intensity of radioactivity of $^{14}C$ per gram of carbon) in the oxalic acid is corrected for carbon isotopic fractionation to a certain value for $^{13}C$, and is then corrected for decay between 1950 AD and the measurement date. This corrected value is taken as the standard $^{14}C$ content (100%). The ratio between this value and the actual measurement value of a sample is defined as pMC.

Thus, a rubber 100% produced from materials derived from biomass is expected to have roughly about 110 pMC, though there are some differences such as regional differences (currently such a rubber often fails to exhibit a value of 100 in a usual state). On the other hand, the measured $^{14}C$ content of a chemical substance derived from a fossil fuel, such as petroleum, is expected to be about 0 pMC (for example, 0.3 pMC). This value corresponds to a biomass ratio of 0% mentioned above.

Based on the above discussion, materials such as rubber with a high pMC i.e., materials such as rubber with a

high biomass ratio can suitably be used in rubber compositions for environmental protection.

Examples of the isoprene-based rubber include natural rubbers (NR), polyisoprene rubbers (IR), refined NR, modified NR, and modified IR. Examples of NR include those commonly used in the rubber industry such as SIR20, RSS#3, and TSR20. Any IR may be used, including those commonly used in the rubber industry such as IR2200. Examples of refined NR include deproteinized natural rubbers (DPNR) and highly purified natural rubbers. Examples of modified NR include epoxidized natural rubbers (ENR), hydrogenated natural rubbers (HNR), and grafted natural rubbers. Examples of modified IR include epoxidized polyisoprene rubbers, hydrogenated polyisoprene rubbers, and grafted polyisoprene rubbers. Each of these may be used alone, or two or more of these may be used in combination.

The polybutadiene rubber (BR) is not limited. Examples include high-cis BR having a high cis content, BR containing syndiotactic polybutadiene crystals, and BR synthesized using rare earth catalysts (rare earthcatalyzed BR). Each of these may be used alone, or two or more of these may be used in combination. In particular, BR preferably includes high-cis BR having a cis content of 90% by mass or higher. The cis content is more preferably 95% by mass or higher. Here, the cis content can be measured by infrared absorption spectrometry.

Herein, when one type of BR is used, the cis content of the BR refers to the cis content of the one BR, while when multiple types of BR are used, it refers to the average cis content.

The average cis content of BR can be calculated using the expression: {$\Sigma$(amount of each BR $\times$ cis content of the each BR)}/amount of total BR. For example, when 100% by mass of rubber components include 20% by mass of BR having a cis content of 90% by mass and 10% by mass of BR having a cis content of 40% by mass, the average cis content of the BR is 73.3% by mass (= (20 $\times$ 90 + 10 $\times$ 40)/(20 + 10)).

The BR may be either an unmodified BR or a modified BR. Examples of the modified BR include those into which the functional groups listed for the modified rubbers have been introduced. The BR may also be a hydrogenated polybutadiene polymer (hydrogenated BR).

Examples of usable BR include products available from UBE Corporation, JSR Corporation, Asahi Kasei Corp., Zeon Corporation, and other manufacturers.

The styrene-butadiene rubber (SBR) is not limited. Examples of SBR include emulsion-polymerized styrene-butadiene rubbers (E-SBR) and solution-polymerized styrene-butadiene rubbers (S-SBR). Each of these may be used alone, or two or more of these may be used in combination.

The styrene content of the SBR is preferably 5% by mass or higher, more preferably 20% by mass or higher, still more preferably 24% by mass or higher. The styrene content is preferably 60% by mass or lower, more preferably 40% by mass or lower, still more preferably 35% by mass or lower. When the styrene content is within the range indicated above, the advantageous effects tend to be better achieved.

Herein, the styrene content can be determined by $^1$H-NMR analysis.

When one type of SBR is used, the styrene content of the SBR refers to the styrene content of the one SBR, while when multiple types of SBR are used, it refers to the average styrene content.

The average styrene content of SBR can be calculated using the expression: {$\Sigma$(amount of each SBR $\times$ styrene content of the each SBR)}/amount of total SBR. For example, when 100% by mass of rubber components include 85% by mass of SBR having a styrene content of 40% by mass and 5% by mass of SBR having a styrene content of 25% by mass, the average styrene content of the SBR is 39.2% by mass (= (85 $\times$ 40 + 5 $\times$ 25)/(85 + 5)).

The vinyl content of the SBR is preferably 3% by mass or higher, more preferably 10% by mass or higher, still more preferably 17% by mass or higher. The vinyl content is preferably 50% by mass or lower, more preferably 40% by mass or lower, still more preferably 30% by mass or lower. When the vinyl content is within the range indicated above, the advantageous effects tend to be better achieved.

Herein, the vinyl content (1,2-butadiene unit content) can be measured by infrared absorption spectrometry.

The vinyl content (1,2-butadiene unit content) of the SBR refers to the percentage (unit: % by mass) of vinyl bonds based on the total mass of the butadiene moieties in the SBR taken as 100. The sum of the vinyl content (% by mass), the cis content (% by mass), and the trans content (% by mass) equals 100 (% by mass). When one type of SBR is used, the vinyl content of the SBR refers to the vinyl content of the one SBR, while when multiple types of SBR are used, it refers to the average vinyl content.

The average vinyl content of SBR can be calculated using the expression: $\Sigma${amount of each SBR $\times$ (100 (% by mass) - styrene content (% by mass) of the each SBR) $\times$ vinyl content (% by mass) of the each SBR}/$\Sigma${amount of each SBR $\times$ (100 (% by mass) - styrene content (% by mass) of the each SBR)}. For example, when 100 parts by mass of rubber components include 75 parts by mass of SBR having a styrene content of 40% by mass and a vinyl content of 30% by mass, 15 parts by mass of SBR having a styrene content of 25% by mass and a vinyl content of 20% by mass, and the remaining 10 parts by mass of a rubber component other than SBR, the average vinyl content of the SBR is 28% by mass (= {75 $\times$ (100 (% by mass) - 40 (% by mass)) $\times$ 30 (% by mass) + 15 $\times$ (100 (% by mass) - 25 (% by mass)) $\times$ 20 (% by mass) }/{75 $\times$ (100 (% by mass) - 40 (% by mass)) + 15 $\times$ (100 (% by mass) - 25 (% by mass))}.

The SBR may be either an unmodified SBR or a modified SBR. Examples of the modified SBR include those into which the functional groups listed for the modified rubbers have been introduced. The SBR may also be a hydrogenated

styrene-butadiene copolymer (hydrogenated SBR).

The SBR may be a SBR product manufactured or sold by Sumitomo Chemical Co., Ltd., JSR Corporation, Asahi Kasei Corporation, Zeon Corporation, or other manufacturers or may be SBR synthesized by a known method.

The amount of the isoprene-based rubber, if present, in the rubber composition based on 100% by mass of the rubber component is preferably 5% by mass or more, more preferably 10% by mass or more, still more preferably 15% by mass or more, while it is preferably 80% by mass or less, more preferably 70% by mass or less, still more preferably 60% by mass or less. When the amount is within the range indicated above, the advantageous effects tend to be better achieved.

The amount of the BR, if present, in the rubber composition based on 100% by mass of the rubber component is preferably 5% by mass or more, more preferably 10% by mass or more, still more preferably 15% by mass or more, while it is preferably 80% by mass or less, more preferably 70% by mass or less, still more preferably 60% by mass or less. When the amount is within the range indicated above, the advantageous effects tend to be better achieved.

The amount of the SBR, if present, in the rubber composition based on 100% by mass of the rubber component is preferably 5% by mass or more, more preferably 10% by mass or more, still more preferably 15% by mass or more, while it is preferably 80% by mass or less, more preferably 70% by mass or less, still more preferably 60% by mass or less. When the amount is within the range indicated above, the advantageous effects tend to be better achieved.

The rubber composition contains a cyclic amine with a double bond in its ring.

Herein, the term "cyclic amine with a double bond in its ring" refers to a cyclic amine compound with a ring structure including at least one double bond.

The amount of the cyclic amine with a double bond in its ring (total amount of cyclic amines with a double bond in its ring) per 100 parts by mass of the rubber component in the rubber composition is preferably 0.1 parts by mass or more, more preferably 0.3 parts by mass or more, still more preferably 0.5 parts by mass or more, further preferably 1.0 parts by mass or more, further preferably 2.0 parts by mass or more, further preferably 4.0 parts by mass or more, while it is preferably 15.0 parts by mass or less, more preferably 10.0 parts by mass or less, still more preferably 6.0 parts by mass or less. When the amount is within the range indicated above, the advantageous effects tend to be better achieved.

Any cyclic amine with a double bond in its ring that can exhibit the above-described function and effect may be used. Examples of the ring form include a three-membered ring, a four-membered ring, a five-membered ring, and a six-membered ring. To better achieve the advantageous effects, the ring form is preferably a five-membered ring or a six-membered ring, more preferably a five-membered ring among these. The cyclic amine may have a heteroatom other than a nitrogen atom.

The cyclic amine with a double bond in its ring is especially suitably an imidazole compound or a pyridine compound, particularly preferably an imidazole compound.

The imidazole compound is a compound with an imidazole ring and is preferably a compound represented by the following formula (I):

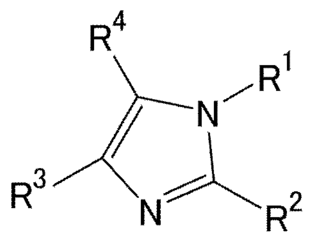

(I)

wherein $R^1$, $R^2$, $R^3$, and $R^4$ are the same as or different from each other and each represent a hydrogen atom or a hydrocarbon group, and $R^3$ and $R^4$ may bind to each other to form a ring structure.

Examples of the hydrocarbon group as each of $R^1$, $R^2$, $R^3$, and $R^4$ include C1-C20 (preferably C2-C12, more preferably C4-C9) alkyl groups, C5-C24 (preferably C5-C8) cycloalkyl groups, C6-C30 (preferably C6-C24) aryl groups, and C7-C25 (preferably C7-C13) aralkyl groups.

In the case where $R^3$ and $R^4$ bind to each other to form a ring structure, examples of the ring structure including $R^3$, $R^4$, and the carbon atoms of the imidazole ring include a C5-C12 aromatic ring, a C5-C12 heterocyclic ring, and a C5-C12 aliphatic ring.

To better achieve the advantageous effects, preferably, at least one of $R^1$, $R^2$, $R^3$, and $R^4$ is an alkyl group, more preferably at least one of $R^1$, $R^2$, $R^3$, and $R^4$ is an alkyl group and the other three are hydrogen atoms, still more preferably $R^1$ is an alkyl group and $R^2$, $R^3$, and $R^4$ are hydrogen atoms.

Here, a small number of carbon atoms of an alkyl group as $R^1$ leads to stronger ionic bonds between the imidazole compound and the high structure carbon black, which tends to increase the hardness. A large number of carbon atoms leads to weaker ionic bonds between the imidazole compound and the high structure carbon black. The weaker ionic bonds are likely to break, so that the force during bending is likely to be released.

Specific examples of the imidazole compound include imidazole, 1-nonylimidazole, 1-butylimidazole, 1-propylimidazole, 1-ethylimidazole, 1-methylimidazole, 1,2-dimethylimidazole, 1-decyl-2-methylimidazole, and 1-benzyl-2-methylimidazole. Each of these may be used alone, or two or more of these may be used in combination. Of these, 1-nonylimidazole, 1-butylimidazole, 1-propylimidazole, 1-ethylimidazole, or 1-methylimidazole is preferred, 1-nonylimidazole or 1-butylimidzole is more preferred, and 1-nonylimidazole is still more preferred.

The pyridine compound is a compound with a pyridine ring and is preferably a compound represented by the following formula (II):

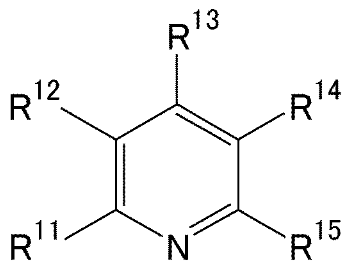

(II)

wherein $R^{11}$ to $R^{15}$ bound to the pyridine ring are the same as or different from each other and each represent a hydrogen atom or a monovalent organic group. $R^{11}$ to $R^{15}$ may bind to each other and may form a ring structure.

In the case where any of $R^{11}$ to $R^{15}$ in the formula (II) is a monovalent organic group, examples of the monovalent organic group include aryl groups, heterocyclic groups, alkyl groups, alkenyl groups, alkynyl groups, alkoxy groups, aryloxy groups, arylalkoxy groups, silyl groups, hydroxy groups, amino groups, halogen atoms, carboxyl groups, thiol groups, epoxy groups, acyl groups, oligoaryl groups, monovalent oligoheterocyclic groups, alkylthio groups, arylthio groups, arylalkyl groups, arylalkoxy groups, arylalkylthio groups, azo groups, stannyl groups, phosphino groups, silyloxy groups, aryloxycarbonyl groups, alkoxycarbonyl groups, carbamoyl groups, arylcarbonyl groups, alkylcarbonyl groups, arylsulfonyl groups, alkylsulfonyl groups, arylsulfinyl groups, alkylsulfinyl groups, formyl groups, cyano groups, nitro groups, arylsulfonyloxy groups, alkylsulfonyloxy groups, alkylsulfonate groups, arylsulfonate groups, arylalkylsulfonate groups, boryl groups, sulfonium methyl groups, phosphonium methyl groups, phosphonate methyl groups, arylsulfonate groups, aldehyde groups, and acetonitrile groups, all of which may be substituted. In the case of a substituted monovalent organic group as any of $R^{11}$ to $R^{15}$, it may have one substituent or two or more substituents.

In the case of a substituted monovalent organic group as any of $R^{11}$ to $R^{15}$, examples of the substituent include halogen atoms such as a fluorine atom, a chlorine atom, a bromine atom, and an iodine atom; haloalkyl groups such as a chloromethyl group, a bromomethyl group, an iodomethyl group, a fluoromethyl group, a difluoromethyl group, and a trifluoromethyl group; C1-C20 linear or branched alkyl groups such as a methyl group, an ethyl group, a propyl group, an isopropyl group, a butyl group, an isobutyl group, a sec-butyl group, and a tert-butyl group; C5-C7 cyclic alkyl groups such as a cyclopentyl group, a cyclohexyl group, and a cycloheptyl group; C1-C20 linear or branched alkoxy groups such as a methoxy group, an ethoxy group, a propoxy group, an isopropoxy group, a butoxy group, an isobutoxy group, a tert-butoxy group, a pentyloxy group, a hexyloxy group, a heptyloxy group, and an octyloxy group; hydroxy groups; thiol groups; nitro groups; cyano groups; amino groups; azo groups; acyl groups; C2-C20 alkenyl groups such as a vinyl group, a 1-propenyl group, an allyl group, a butenyl group, and a styryl group; C2-C20 alkynyl groups such as an ethynyl group, a 1-propynyl group, a propargyl group, and a phenylacetylenyl group; alkenyloxy groups such as a vinyloxy group and an allyloxy group; alkynyloxy groups such as an ethynyloxy group and a phenylacetyloxy group; and aryloxy groups such as a phenoxy group, a naphthoxy group, a biphenyloxy group, and a pyrenyloxy group. These groups may bind to each other to form a ring at any position.

Specific examples of the pyridine compound include pyridine, 2-methylpyridine, 3-methylpyridine, 4-methylpyridine, and 4-dimethylaminopyridine. Each of these may be used alone, or two or more of these may be used in combination. In view of basic strength, 2-methylpyridine, 3-methylpyridine, 4-methylpyridine, and 4-dimethylaminopyridine are preferred, and 4-dimethylaminopyridine is more preferred among these. The use of a strongly basic pyridine compound leads to stronger ionic bonds between the pyridine compound and the high structure carbon black, which tends to increase the hardness.

The rubber composition contains a carbon black having a 24M4DBP oil absorption of 170 ml/100 g or more as a filler.

The 24M4DBP oil absorption (compressed dibutyl phthalate oil absorption) of the carbon black is preferably 200 ml/100 g or more, more preferably 250 ml/100 g or more, still more preferably 300 ml/100 g or more, further preferably 350 ml/100 g or more, further preferably 400 ml/100 g or more, further preferably 420 ml/100 g or more. The upper limit of the 24M4DBP oil absorption is not limited, and it is preferably 1000 ml/100 g or less, more preferably 800 ml/100 g or less, still more preferably 600 ml/100 g or less, further preferably 500 ml/100 g or less.

The 24M4DBP oil absorption of the carbon black is measured in accordance with ASTM D3493-91 (standard test method for carbon black-n-dibutyl phthalate absorption number of compressed sample).

The carbon black having a 24M4DBP oil absorption of 170 ml/100 g or more may be any carbon black having a 24M4DBP oil absorption of 170 ml/100 g or more. The carbon black may be one of GPF, FEF, HAF, ISAF, SAF, and the like or a combination of two or more of these. Example of usable commercial products include products available from Orion Engineered Carbons.

The amount of the carbon black having a 24M4DBP oil absorption of 170 ml/100 g or more per 100 parts by mass of the rubber component is preferably 3 parts by mass or more, more preferably 5 parts by mass or more, still more preferably 7 parts by mass or more, further preferably 10 parts by mass or more, further preferably 15 parts by mass or more. The amount is preferably less than 40 parts by mass, more preferably less than 30 parts by mass, still more preferably less than 25 parts by mass, further preferably less than 20 parts by mass. When the amount is within the range indicated above, the advantageous effects tend to be better achieved.

The rubber composition may contain a filler other than the carbon black having a 24M4DBP oil absorption of 170 ml/100 g or more.

The filler other than the carbon black having a 24M4DBP oil absorption of 170 ml/100 g or more is not limited and may be a known material in the rubber field. Examples include a carbon black having a 24M4DBP oil absorption of less than 170 ml/100 g; inorganic fillers such as silica, calcium carbonate, talc, alumina, clay, aluminum hydroxide, aluminum oxide, and mica; bio char, and hard-to-disperse fillers. To better achieve the advantageous effect, a carbon black having a 24M4DBP oil absorption of less than 170 ml/100 g and silica are preferred among these.

The amount of the filler (total amount of fillers such as carbon black and silica) per 100 parts by mass of the rubber component in the rubber composition is preferably 3 parts by mass or more, more preferably 5 parts by mass or more, still more preferably 7 parts by mass or more, further preferably 10 parts by mass or more, further preferably 15 parts by mass or more. The amount is preferably less than 40 parts by mass, more preferably less than 30 parts by mass, still more preferably less than 25 parts by mass, further preferably less than 20 parts by mass. When the amount is within the range indicated above, the advantageous effects tend to be better achieved.

The mechanism of the enhancement of the advantageous effects provided by the use of less than a predetermined amount of the filler, in particular, less than 40 parts by mass, is not clear. A small amount of the filler is not likely to inhibit the self-repairing properties of the rubber composition after it is vulcanized, so that the self-repairing properties of the vulcanized rubber composition may increase. Presumably, the rubber composition thus can further improve overall performance in terms of hardness and crack growth resistance.

Non-limiting examples of the carbon black having a 24M4DBP oil absorption of less than 170 ml/100 g include N134, N110, N220, N234, N219, N339, N330, N326, N351, N550, and N762. The raw material of the carbon black may be a biomass material such as lignin or a plant oil or may be a pyrolysis oil obtained by pyrolyzing waste tires. The carbon black may be produced through combustion, for example, by the furnace method, through hydrothermal carbonization (HTC), or through thermal decomposition of methane, for example, by thermal black method. Usable commercial products are available from Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon, and other manufacturers. Each of these carbon black may be used alone, or two or more of these may be used in combination.

The nitrogen adsorption specific surface area ($N_2SA$) of the carbon black having a 24M4DBP oil absorption of less than 170 ml/100 g is preferably 5 $m^2/g$ or more, more preferably 50 $m^2/g$ or more, still more preferably 90 $m^2/g$ or more. The $N_2SA$ is preferably 200 $m^2/g$ or less, more preferably 130 $m^2/g$ or less, still more preferably 120 $m^2/g$ or less. When the $N_2SA$ is within the range indicated above, the advantageous effects tend to be better achieved.

Herein, the nitrogen adsorption specific surface area of carbon black may be determined in accordance with JIS K 6217-2:2001.

The amount of the carbon black having a 24M4DBP oil absorption of less than 170 ml/100 g, if present, in the rubber composition per 100 parts by mass of the rubber component is preferably 0.5 parts by mass or more, more preferably 1.0 parts by mass or more, still more preferably 3.0 parts by mass or more, while it is preferably 150 parts by mass or less, more preferably 120 parts by mass or less, still more preferably 100 parts by mass or less. When the amount is within the range indicated above, the advantageous effects tend to be better achieved.

Non-limiting examples of silica usable in the rubber composition include silica usually used in the tire industry, such as silica (anhydrous silica) prepared by a dry process and silica (hydrous silica) prepared by a wet process. The raw material of the silica is not limited and may be a raw material derived from minerals such as quartz or a raw material derived from a biological resource such as husks (for example, silica made from a biomass material such as husks as a raw material). The silica may be silica recycled from a silica-containing product. Preferred among these are hydrous silica prepared by a wet process because it has a large number of silanol groups. The silica may be used alone or two or more types of the silica may be used in combination.

The silica made from a biomass material can be obtained by, for example, extracting a silicate using a sodium hydroxide solution from husk ash that is obtained by burning husks, subsequently, as in production of conventional wet

silica, reacting the silicate with sulfuric acid to precipitate silicon dioxide, and then subjecting the precipitated silicon dioxide to filtration, water washing, drying, and grinding.

The silica recycled from a silica-containing product may be silica recovered from a silica-containing product including an electronic component such as a semiconductor, a tire, a drying agent, or a filtering material such as diatomite. Non-limiting examples of the recovering method include thermal decomposition and decomposition by electromagnetic waves. Preferred among these is silica recovered from an electronic component such as a semiconductor or a tire.

Since crystalline silica does not dissolve in water, silicic acid as a component thereof cannot be utilized. Crystallization of silica in husk ash can be suppressed by controlling the burning temperature and burning time (see JP 2009-2594 A, Akita Prefectural University Web Journal B/2019, vol.6, pp.216-222, for example).

Amorphous silica extracted from husks may be commercially available from Wilmar and other manufacturers.

The amount of silica, if present, in the rubber composition per 100 parts by mass of the rubber component is preferably 5 parts by mass or more, more preferably 40 parts by mass or more, still more preferably 50 parts by mass or more, while it is preferably 150 parts by mass or less, more preferably 120 parts by mass or less, still more preferably 100 parts by mass or less. When the amount is within the range indicated above, the advantageous effects tend to be better achieved.

The nitrogen adsorption specific surface area ($N_2SA$) of the silica is preferably 50 $m^2/g$ or more, more preferably 100 $m^2/g$ or more, still more preferably 150 $m^2/g$ or more. The upper limit of the $N_2SA$ of the silica is not limited, and it is preferably 350 $m^2/g$ or less, more preferably 300 $m^2/g$ or less, still more preferably 250 $m^2/g$ or less. When the $N_2SA$ is within the range indicated above, the advantageous effects tend to be better achieved.

The $N_2SA$ of silica is measured by a BET method in accordance with ASTM D3037-93.

Examples of hard-to-disperse fillers include microfibrillated plant fibers, short fibrous celluloses, and gel compounds. Microfibrillated plant fibers are preferred among these.

To obtain good reinforcement, cellulose microfibrils are preferred among the microfibrillated plant fibers. Any cellulose microfibril derived from natural products may be used. Examples include those derived from resource biomass such as fruits, grains, and root vegetables; wood, bamboo, hemp, jute, and kenaf, and pulp, paper, or cloth produced therefrom; waste biomass such as agricultural waste, food waste, and sewage sludge; unused biomass such as rice straw, wheat straw, and thinnings; and celluloses produced by ascidians, acetic acid bacteria, or other organisms. Each of these microfibrillated plant fibers may be used alone, or two or more of these may be used in combination.

Herein, the term "cellulose microfibrils" typically refers to cellulose fibers having an average fiber diameter of not more than 10 $\mu m$, more typically cellulose fibers having a microstructure with an average fiber diameter of not more than 500 nm formed by aggregation of cellulose molecules. For example, typical cellulose microfibrils may be formed as aggregates of cellulose fibers having an average fiber diameter indicated above.

The amount of hard-to-disperse fillers, if present, in the rubber composition per 100 parts by mass of the rubber component is preferably 1 part by mass or more, more preferably 3 parts by mass or more, still more preferably 5 parts by mass or more. The upper limit of the amount is preferably 50 parts by mass or less, more preferably 30 parts by mass or less, still more preferably 20 parts by mass or less, particularly preferably 10 parts by mass or less. When the amount is within the range indicated above, the advantageous effects tend to be better achieved.

The rubber composition which contains silica preferably further contains a silane coupling agent.

Any silane coupling agent may be used, and those known in the rubber field are usable. Examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyltetrasulfide, 2-triethoxysilylethyl-N,N-dimethylthiocarbamoyltetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as $\gamma$-glycidoxypropyltriethoxysilane and $\gamma$-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Usable commercial products are available from Degussa, Momentive, Shin-Etsu Silicone, Tokyo Chemical Industry Co., Ltd., AZmax. Co., Dow Corning Toray Co., Ltd., and other manufacturers. Each of these may be used alone, or two or more of these may be used in combination.

The amount of silane coupling agents per 100 parts by mass of silica in the rubber composition is preferably 0.1 parts by mass or more, more preferably 3 parts by mass or more, still more preferably 5 parts by mass or more, particularly preferably 7 parts by mass or more. The upper limit of the amount is preferably 50 parts by mass or less, more preferably 20 parts by mass or less, still more preferably 15 parts by mass or less, particularly preferably 10 parts by mass or less. When the amount is within the range indicated above, the advantageous effects tend to be better achieved.

The rubber composition may contain a plasticizer.

Herein, the term "plasticizer" refers to a material that imparts plasticity to rubber components and conceptually includes both plasticizers that are liquid at room temperature (25°C) and plasticizers that are solid at room temperature (25°C). Examples of the plasticizer include resin components, oils, liquid polymers, and ester plasticizers. These plasticizers may be derived from mineral resources such as petroleum or natural gas, biomass, or naphtha recycled from rubber products or non-rubber products. Usable plasticizers also include low molecular weight hydrocarbon components obtained by subjecting used tires or products containing various components to pyrolysis and extraction. Each of these plasticizers may be used alone, or two or more of these may be used in combination.

Specific examples of the plasticizer include oils, liquid polymers, and resins. Each of these may be used alone, or two or more of these may be used in combination.

Examples of the oils include mineral oils, plant oils, and animal oils. In view of life cycle assessment, oils obtained by purifying waste oils used in rubber mixing machines or engines or waste cooking oils used in cooking establishments may be used.

Herein, mineral oils refer to oils derived from mineral resources such as petroleum or natural gas. Examples of the mineral oils include paraffinic oils (mineral oils), naphthenic oils, and aromatic oils. Specific examples of the mineral oils include mild extract solvates (MES), distillate aromatic extracts (DAE), treated distillate aromatic extracts (TDAE), treated residual aromatic extracts (TRAE), and residual aromatic extracts (RAE). For environmental protection, oils with a low polycyclic aromatic compound (PCA) content may be used. Examples of the oils with a low PCA content include MES, TDAE, and heavy naphthenic oils.

Herein, examples of the plant oils include linseed oil, rapeseed oil, safflower oil, soybean oil, corn oil, cotton seed oil, rice oil, tall oil, sesame oil, perilla oil, castor oil, tung oil, pine oil, pine tar oil, sunflower oil, coconut oil, palm oil, palm kernel oil, olive oil, camellia oil, jojoba oil, macadamia nut oil, peanut oil, grape seed oil, and Japan tallow. Examples of the plant oils also include refined oils (e.g., salad oil) produced by refining the above-mentioned oils, esterified oils produced by esterifying the above-mentioned oils, hardened oils produced by hydrogenation of the above-mentioned oils, thermally polymerized oils produced by thermal polymerization of the above-mentioned oils, oxidized polymerized oils produced by oxidizing the above-mentioned oils, and waste edible oils recovered from used edible oils or the like. The plant oils may be liquid or solid at room temperature (25°C). Each of these plant oils may be used alone, or two or more of these may be used in combination.

The plant oils according to the present embodiments each preferably contain acylglycerol and more preferably contain triacylglycerol. Herein, the term "acylglycerol" refers to a compound in which hydroxy groups of glycerol are ester-bonded to a fatty acid. Non-limiting examples of the acylglycerol include 1-monoacylglycerol, 2-monoacylglycerol, 1,2-diacylglycerol, 1,3-diacylglycerol, and triacylglycerol. Moreover, the acylglycerol may be a monomer, a dimer, or a trimer or higher multimer. A dimer or higher multimer acylglycerol may be obtained by thermal polymerization or oxidation polymerization, for example. The acylglycerol may be liquid or solid at room temperature (25°C).

Whether a rubber composition contains the acylglycerol may be examined by any method such as $^1$H-NMR analysis. For example, a rubber composition containing triacylglycerol is immersed in deuterium chloroform at room temperature (25°C) for 24 hours. After removing the rubber composition, the $^1$H-NMR is measured at room temperature. Signals observed at around 5.26 ppm, around 4.28 ppm, and around 4.15 ppm, each relative to the signal of tetramethylsilane (TMS) taken as 0.00 ppm, are assumed as the signals of hydrogen atoms bound to carbon atoms adjacent to the oxygen atoms of ester groups. The term "around" in this paragraph refers to a range of $\pm$ 0.10 ppm.

The fatty acid is not limited and may be an unsaturated fatty acid or a saturated fatty acid. Examples of the unsaturated fatty acid include monounsaturated fatty acids such as oleic acid and polyunsaturated fatty acids such as linoleic acid and linolenic acid. Examples of the saturated fatty acid include butyric acid and lauric acid.

Of these fatty acids, fatty acids with few double bonds, specifically saturated fatty acids or monounsaturated fatty acids are desirable, and oleic acid is preferred. Examples of usable plant oils containing such fatty acids include plant oils containing saturated fatty acids or monounsaturated fatty acids and plant oils modified by transesterification or the like. Plants may be improved by breed improvement, genetic modification, genome editing, or other techniques to produce plant oils containing such fatty acids.

Usable commercial oils may be available from Idemitsu Kosan Co., Ltd., Sankyo Yuka Kogyo K.K., ENEOS Corporation, Olisoy, H&R, Hokoku Corporation, Fuji Kosan Co., Ltd., Nisshin Oillio Group, and other manufacturers.

Examples of the liquid polymers include liquid diene-based polymers (liquid rubbers) and liquid farnesene polymers, all of that are liquid at 25°C. Examples of liquid rubbers include liquid styrene-butadiene copolymers (liquid SBR), liquid butadiene polymers (liquid BR), liquid isoprene polymers (liquid IR), liquid styrene-isoprene copolymers (liquid SIR), liquid styrene-butadiene-styrene block copolymers (liquid SBS block polymers), and liquid styrene-isoprene-styrene block copolymers (liquid SIS block polymers). A chain end or the backbone of these may be modified with a polar group. Hydrogenated products of these are also usable.

The weight average molecular weight (Mw) of the liquid diene-based polymers is preferably $1.0 \times 10^3$ to $5.0 \times 10^4$, more preferably $3.0 \times 10^3$ to $1.5 \times 10^4$ as measured by gel permeation chromatography (GPC) and calibrated with

polystyrene standards. The lower limit of the Mw of the liquid diene-based polymers may be 4500 or 8500, and the upper limit may be 4500 or 8500.

Herein, the Mw of the liquid diene-based polymers is measured by gel permeation chromatography (GPC) and calibrated with polystyrene standards.

Usable liquid diene-based polymers may be commercially available from Sartomer, Kraray, and other manufacturers.

The resins may be resins that are usually used as additives for tires. They may be either liquid or solid at room temperature (25°C). Examples include aromatic vinyl polymers, coumarone-indene resins, coumarone resins, indene resins, phenol resins, rosin resins, petroleum resins, terpene resins, and acrylic resins. The resins may be those hydrogenated (hydrogenated resins). Each of these may be used alone, or two or more of these may be used in combination. The resins themselves may be copolymers of different monomers. Of these, aromatic vinyl polymers, petroleum resins, terpene resins, and hydrogenated products of these polymers and resins are desirable.

The softening point of the resins that are solid at room temperature, if used, is preferably 50°C or higher, more preferably 55°C or higher, still more preferably 60°C or higher, particularly preferably 85°C or higher, while it is preferably 160°C or lower, more preferably 150°C or lower, still more preferably 140°C or lower, particularly preferably 100°C or lower. When the softening point is within the range indicated above, the advantageous effects tend to be better achieved.

The softening point of the resins that are liquid at room temperature is preferably 20°C or lower, more preferably 10°C or lower, still more preferably 0°C or lower.

Hydrogenated resins desirably have a softening point within the range indicated above.

The softening point of the resins is determined in accordance with JIS K 6220-1:2001 using a ring and ball softening point measuring apparatus. The temperature at which the ball drops down is defined as the softening point.

The aromatic vinyl polymers refer to polymers containing aromatic vinyl monomers as structural units. Examples include resins produced by polymerization of α-methylstyrene and/or styrene. Specific examples include styrene homopolymers (styrene resins), α-methylstyrene homopolymers (α-methylstyrene resins), copolymers of α-methylstyrene and styrene, and copolymers of styrene and other monomers.

The coumarone-indene resins refer to resins containing coumarone and indene as the main monomer components forming the skeleton (backbone) of the resins. Examples of monomer components which may be contained in the skeleton in addition to coumarone and indene include styrene, α-methylstyrene, methylindene, and vinyltoluene.

The coumarone resins refer to resins containing coumarone as the main monomer component forming the skeleton (backbone) of the resins.

The indene resins refer to resins containing indene as the main monomer component forming the skeleton (backbone) of the resins.

Examples of the phenol resins include known polymers produced by reacting phenol with an aldehyde such as formaldehyde, acetaldehyde, or furfural in the presence of an acid or alkali catalyst. Preferred among these are those produced by reacting them in the presence of an acid catalyst, such as novolac phenol resins.

Examples of the rosin resins include rosin resins typified by natural rosins, polymerized rosins, modified rosins, and esterified compounds thereof, and hydrogenated products thereof.

Examples of the petroleum resins include C5 resins, C9 resins, C5/C9 resins, dicyclopentadiene (DCPD) resins, C9/DCPD resins, and hydrogenated products of these resins. DCPD resins, hydrogenated DCPD resins, C9/DCPD resins, and C9/hydrogenated DCPD resins are preferred among these.

The terpene resins refer to polymers containing terpene as structural units. Examples include polyterpene resins produced by polymerizing terpene compounds and aromatic modified terpene resins produced by polymerizing terpene compounds and aromatic compounds. Examples of usable aromatic modified terpene resins include terpene-phenol resins made from the terpene compounds and phenolic compounds, terpene-styrene resins made from the terpene compounds and styrene compounds, and terpene-phenol-styrene resins made from the terpene compounds, phenolic compounds, and styrene compounds. Examples of the terpene compounds include α-pinene and β-pinene. Examples of the phenolic compounds include phenol and bisphenol A. Examples of the aromatic compounds include styrene compounds such as styrene and α-methylstyrene. Aromatic modified terpene resins are preferred among these.

The acrylic resins refer to polymers containing acrylic monomers as structural units. Examples include styrene acrylic resins such as those which contain carboxyl groups and are produced by copolymerization of aromatic vinyl monomer components and acrylic monomer components. Solvent-free, carboxyl group-containing styrene acrylic resins are suitably usable among these.

The resins may be commercially available from, for example, Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, ExxonMobil, KRATON, Nitto Chemical Co., Ltd., Nippon Shokubai Co., Ltd., ENEOS Corporation, Arakawa Chemical Industries, Ltd., Taoka Chemical Co., Ltd., and other manufacturers.

Desirable plasticizers in view of sustainability are plant-derived plasticizers such as the plant-derived oils and farnesene polymers.

The term "farnesene polymer" refers to a polymer that is produced by polymerizing farnesene and contains a farnesene-based structural unit. Farnesene has isomers such as α-farnesene ((3E,7E)-3,7,11-trimethyl-1,3,6,10-dodecatetraene) and β-farnesene (7,11-dimethyl-3-methylene-1,6,10-dodecatriene). Preferred is (E)-β-farnesene having the following structure:

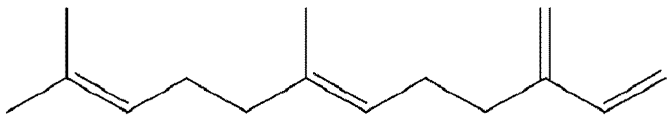

.

The farnesene polymers may be either homopolymers of farnesene (farnesene homopolymers) or copolymers of farnesene and vinyl monomers (farnesene-vinyl monomer copolymers). Each of these may be used alone, or two or more of these may be used in combination. Copolymers of farnesene and vinyl monomers are preferred among these.

Examples of the vinyl monomers include aromatic vinyl compounds such as styrene, 2-methylstyrene, 3-methylstyrene, 4-methylstyrene, α-methylstyrene, 2,4-dimethylstyrene, 2,4-diisopropylstyrene, 4-tert-butylstyrene, 5-t-butyl-2-methylstyrene, vinylethylbenzene, divinylbenzene, trivinylbenzene, divinylnaphthalene, tertbutoxystyrene, vinylbenzyldimethylamine, (4-vinylbenzyl)dimethylaminoethyl ether, N,N-dimethylaminoethylstyrene, N,N-dimethylaminomethylstyrene, 2-ethylstyrene, 3-ethylstyrene, 4-ethylstyrene, 2-t-butylstyrene, 3-t-butylstyrene, 4-t-butylstyrene, vinylxylene, vinylnaphthalene, vinyltoluene, vinylpyridine, diphenylethylene, and tertiary amino group-containing diphenylethylenes, and conjugated diene compounds such as butadiene and isoprene. Each of these may be used alone, or two or more of these may be used in combination. Butadiene is preferred among these. In other words, copolymers of farnesene and butadiene (farnesene-butadiene copolymers) are preferred among the farnesene-vinyl monomer copolymers.

The copolymerization ratio of farnesene and vinyl monomers (farnesene/vinyl monomers) of the farnesene-vinyl monomer copolymers is preferably 40/60 to 90/10 by mass.

Farnesene polymers having a weight average molecular weight (Mw) of 3000 or more and 300000 or less may be suitably used. The Mw of the farnesene polymers is preferably 8000 or more, more preferably 10000 or more, while it is preferably 100000 or less, more preferably 60000 or less, still more preferably 50000 or less. When the weight average molecular weight is within the range indicated above, the advantageous effects tend to be better achieved.

Farnesene polymers that are either liquid or solid at room temperature (25°C) may be used. Of these, liquid farnesene polymers that are liquid at room temperature (25°C) are desirable.

The amount of the plasticizer (total amount of plasticizers) per 100 parts by mass of the rubber component in the rubber composition is preferably 1 part by mass or more, more preferably 5 parts by mass or more, still more preferably 10 parts by mass or more. The upper limit is preferably 50 parts by mass or less, more preferably 30 parts by mass or less, still more preferably 25 parts by mass or less. When the amount is within the range indicated above, the advantageous effects tend to be better achieved.

The amount of the plasticizer includes the amounts of oils and resins contained in oil-extended rubbers and resin-extended rubbers, respectively.

The amount of solid plasticizers that are solid at room temperature (25°C) per 100 parts by mass of the rubber component in the rubber composition is preferably 20 parts by mass or less, more preferably 5 parts by mass or less, still more preferably 1 part by mass or less, and may be 0 parts by mass. When the amount is within the range indicated above, the advantageous effects tend to be better achieved.

The amount of the resins that are solid at room temperature (25°C) per 100 parts by mass of the rubber component in the rubber composition is preferably 20 parts by mass or less, more preferably 5 parts by mass or less, still more preferably 1 part by mass or less, and may be 0 parts by mass. When the amount is within the range indicated above, the advantageous effects tend to be better achieved.

The amount of liquid plasticizers that are liquid at room temperature (25°C) per 100 parts by mass of the rubber component in the rubber composition is preferably 1 part by mass or more, more preferably 5 parts by mass or more, still more preferably 10 parts by mass or more. The upper limit is preferably 50 parts by mass or less, more preferably 30 parts by mass or less, still more preferably 25 parts by mass or less. When the amount is within the range indicated above, the advantageous effects tend to be better achieved.

The amount of the liquid plasticizers includes the amount of oils in oil-extended rubbers and the amount of liquid resins in resin-extended rubbers extended with liquid resins.

The amount of oils per 100 parts by mass of the rubber component in the rubber composition is preferably 1 part by mass or more, more preferably 5 parts by mass or more, still more preferably 10 parts by mass or more. The upper limit is preferably 50 parts by mass or less, more preferably 30 parts by mass or less, still more preferably 25 parts by mass or less. When the amount is within the range indicated above, the advantageous effects tend to be better achieved.

The amount of oils includes the amount of oils in oil-extended rubbers.

The rubber composition may further contain vulcanized rubber particles.

The term "vulcanized rubber particles" refers to particles made of vulcanized rubber. Examples of usable vulcanized rubber particles include rubber powder stipulated in JIS K 6316:2017. From the perspective of environmental considerations and cost, recycled rubber powder produced from pulverized waste tires or the like is preferred. Each of these may be used alone, or two or more of these may be used in combination.

The vulcanized rubber particles are not limited and may be unmodified vulcanized rubber particles or modified vulcanized rubber particles.

Examples of usable commercial products of vulcanized rubber particles include those available from Lehigh, Muraoka Rubber Reclaiming Co., Ltd, and other manufacturers.

The amount of vulcanized rubber particles per 100 parts by mass of the rubber component in the rubber composition is preferably 5 parts by mass or more, more preferably 7 parts by mass or more, still more preferably 10 parts by mass or more, while it is preferably 30 parts by mass or less, more preferably 20 parts by mass or less, still more preferably 15 parts by mass or less. When the amount is within the range indicated above, the advantageous effects tend to be better achieved.

In view of crack resistance, ozone resistance, or the like, the rubber composition preferably contains an antioxidant.

Non-limiting examples of the antioxidant include naphthylamine antioxidants such as phenyl-$\alpha$-naphthylamine; diphenylamine antioxidants such as octylated diphenylamine and 4,4'-bis($\alpha$,$\alpha$'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine (6PPD), N,N'-bis(1,4-dimethylpentyl)-p-phenylenediamine (77PD), N,N'-diphenyl-p-phenylenediamine (DPPD), N,N'-ditolyl-p-phenylenediamine (DTPD), N-isopropyl-N'-phenyl-p-phenylenediamine (IPPD), and N,N'-di-2-naphthyl-p-phenylenediamine (DNPD); quinoline antioxidants such as polymerized 2,2,4-trimethyl-1,2-dihydroquinoline; monophenolic antioxidants such as 2,6-dit-butyl-4-methylphenol and styrenated phenol; and bis-, tris-, or polyphenolic antioxidants such as tetrakis[methylene-3-(3',5'-di-t-butyl-4'-hydroxyphenyl) propionate]methane. Preferred among these are p-phenylenediamine antioxidants and quinoline antioxidants, with N-(1,3-dimethylbutyl)-N'-phenyl-p-phenylenediamine or polymerized 2,2,4-trimethyl-1,2-dihydroquinoline being more preferred. Usable commercial products are available from Seiko Chemical Co., Ltd., Sumitomo Chemical Co., Ltd., Ouchi Shinko Chemical Industrial Co., Ltd., Flexsys, and other manufacturers.

The amount of the antioxidant per 100 parts by mass of the rubber component in the rubber composition is preferably 0.2 parts by mass or more, more preferably 2.0 parts by mass or more, still more preferably 3.4 parts by mass or more. The amount is preferably 10.0 parts by mass or less, more preferably 6.0 parts by mass or less.

The rubber composition preferably contains stearic acid.

The amount of the stearic acid per 100 parts by mass of the rubber component in the rubber composition is preferably 0.5 parts by mass or more, more preferably 1.5 parts by mass or more, still more preferably 2.0 parts by mass or more, while it is preferably 10 parts by mass or less, more preferably 5 parts by mass or less.

Here, conventionally known stearic acid may be used, including, for example, those available from NOF Corporation, Kao Corporation, FUJIFILM Wako Pure Chemical Corporation, Chiba Fatty Acid Co., Ltd., and other manufacturers.

The rubber composition preferably contains zinc oxide.

The amount of the zinc oxide per 100 parts by mass of the rubber component in the rubber composition is preferably 0.5 parts by mass or more, more preferably 1.5 parts by mass or more, still more preferably 2.0 parts by mass or more, while it is preferably 6.0 parts by mass or less, more preferably 4.0 parts by mass or less.

Here, conventionally known zinc oxide may be used, including, for example, those available from Mitsui Mining & Smelting Co., Ltd., Toho Zinc Co., Ltd., HakusuiTech Co., Ltd., Seido Chemical Industry Co., Ltd., Sakai Chemical Industry Co., Ltd., and other manufacturers.

The rubber composition may contain wax.

The amount of the wax per 100 parts by mass of the rubber component in the rubber composition is preferably 0.5 parts by mass or more, more preferably 1.6 parts by mass or more, while it is preferably 8.0 parts by mass or less, more preferably 5.0 parts by mass or less.

The wax is not limited. Any wax usually used in the tire industry may be suitably used. Examples include mineral wax and plant-derived wax. Mineral wax refers to wax derived from mineral resources such as petroleum or natural gas. Plant-derived wax refers to wax derived from natural resources such as plants. Of these, mineral wax is preferred. Examples of the plant-derived wax include rice wax, carnauba wax, and candelilla wax. Examples of the mineral wax include paraffin wax and microcrystalline wax as well as selected special wax thereof. Paraffin wax is preferred. According to the present embodiments, wax does not include stearic acid. Usable commercial products of wax are available from Ouchi Shinko Chemical Industrial Co., Ltd., Nippon Seiro Co., Ltd., Paramelt, and other manufacturers. Each wax may be used alone, or two or more of these may be used in combination.

The rubber composition preferably contains sulfur as a crosslinking agent in order to moderately crosslink the polymer chains to obtain good properties.

The amount of the sulfur per 100 parts by mass of the rubber component in the rubber composition is preferably 0.1 parts by mass or more, more preferably 0.3 parts by mass or more, still more preferably 0.5 parts by mass or more. The amount of the sulfur is preferably 7.0 parts by mass or less, more preferably 5.0 parts by mass or less, still more preferably 4.0 parts by mass or less, further preferably 2.0 parts by mass or less. When the amount is within the range indicated above, the advantageous effects tend to be better achieved.

Examples of sulfur include those commonly used in the rubber industry, such as powdered sulfur, precipitated sulfur, colloidal sulfur, insoluble sulfur, highly dispersible sulfur, and soluble sulfur. Usable commercial products are available from Tsurumi Chemical Industry Co., Ltd., Karuizawa sulfur Co., Ltd., Shikoku Chemicals Corporation, Flexsys, Nippon Kanryu Industry Co., Ltd., Hosoi Chemical Industry Co., Ltd, and other manufacturers. Each of these may be used alone, or two or more of these may be used in combination.

The rubber composition preferably contains a vulcanization accelerator.

The amount of the vulcanization accelerator in the rubber composition is not limited and may be freely determined according to the desired curing rate and crosslink density. Still, the amount per 100 parts by mass of the rubber component is preferably 0.5 parts by mass or more, more preferably 1.0 parts by mass or more, still more preferably 1.3 parts by mass or more. The upper limit is preferably 8.0 parts by mass or less, more preferably 6.0 parts by mass or less, still more preferably 5.0 parts by mass or less.

Any type of vulcanization accelerators may be used, including those generally used. Examples of the vulcanization accelerators include benzothiazole vulcanization accelerators such as 2-mercaptobenzothiazole, di-2-benzothiazolyl disulfide, and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolylsulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. Each of these may be used alone, or two or more of these may be used in combination. Of these, sulfenamide vulcanization accelerators, guanidine vulcanization accelerators, and benzothiazole vulcanization accelerators are preferred.

In addition to the above-described components, the rubber composition may appropriately contain agents commonly used in the tire industry such as releasing agents or other materials.

Herein, various materials containing carbon atoms (for example, rubbers, oils, resins, vulcanization accelerators, antioxidants, surfactants, or other materials) may be derived from carbon dioxide in the air. Such materials in the present invention may be obtained from carbon dioxide by directly converting carbon dioxide or by synthesizing methane from carbon dioxide through methanation and then converting the methane.

A crosslinked product of the rubber composition can be produced by kneading the components with a rubber kneading machine such as an open roll mill or a Bambury mixer and then crosslinking the kneaded product, for example.

The kneading conditions are as follows. In a base kneading step of kneading additives other than vulcanizing agents and vulcanization accelerators, the kneading temperature is usually 50°C to 200°C, preferably 80°C to 190°C. The duration of the kneading is usually 30 seconds to 30 minutes, preferably 1 minute to 30 minutes. In a final kneading step of kneading vulcanizing agents, vulcanization accelerators, and the like, the kneading temperature is usually 100°C or lower, preferably room temperature to 80°C. The composition obtained after kneading vulcanizing agents and vulcanization accelerators is usually vulcanized by press vulcanization, for example. The vulcanization temperature is usually 120°C to 200°C, preferably 140°C to 180°C.

With regard to the rubber composition, the above-described rubber composition (vulcanized rubber composition) has a tan $\delta$ at 70°C (70°C tan $\delta$) of preferably 0.50 or less, more preferably 0.45 or less, still more preferably 0.30 or less. The tan $\delta$ at 70°C is preferably 0.01 or more, more preferably 0.05 or more, still more preferably 0.10 or more, further preferably 0.20 or more, further preferably 0.23 or more, further preferably 0.25 or more, further preferably 0.27 or more. When the tan $\delta$ at 70°C is within the range indicated above, the advantageous effects tend to be better achieved.

Herein, the tan $\delta$ at 70°C of the rubber composition (vulcanized rubber composition) is measured as stipulated in JIS K 6394 using a viscoelastic spectrometer ("EPLEXOR series" available from GABO) under conditions including an initial strain of 10%, a dynamic strain of 1%, a frequency of 10 Hz, a temperature of 70°C, and an extension mode. In this measurement, a test specimen having a length of 20 mm, a width of 4 mm, and a thickness of 1 mm is collected from an innerliner. If a test specimen collectable from the innerliner has a thickness of only less than 1 mm, the measurement may be performed using the test specimen having a thickness of less than 1 mm. The collection of the test specimen is performed while the length direction and the thickness direction of the test specimen are adjusted to the circumferential direction and the radial direction of the tire, respectively. If a test specimen cannot be collected from the innerliner, a test specimen can be collected from a crosslinked rubber in sheet form (rubber sheet) that is obtained by heating the rubber composition at 170°C for 12 minutes.

The tan $\delta$ at 70°C of the rubber composition (vulcanized rubber composition) may be controlled by methods known to those skilled in the art. For example, the tan $\delta$ at 70°C can be controlled by varying the types or compounding ratio of rubber components or by varying the types and compounding amounts of plasticizers or fillers.

With regard to the rubber composition, the above-described rubber composition (vulcanized rubber composition) preferably has a hardness Hs of more than 45, more preferably more than 47, still more preferably more than 50, further preferably more than 51, particularly preferably more than 52. The hardness Hs is preferably less than 70, more preferably less than 65, still more preferably less than 60, further preferably less than 55. When the hardness Hs is within the range indicated above, the advantageous effects tend to be better achieved.

Herein, the Hs is measured in accordance with JIS K 6253-3(2012), specifically by the method described later in EXAMPLES.

The mechanism of the enhancement of the advantageous effects provided by a hardness Hs that is more than a predetermined value, in particular, more than 45, is not clear. Presumably, the rubber composition with such a high hardness increases the rigidity of the tire itself.

The Hs of the rubber composition (vulcanized rubber composition) may be controlled by methods known to those skilled in the art. For example, the Hs can be controlled by varying the types or compounding ratio of rubber components or by varying the types and compounding amounts of plasticizers or fillers.

In the rubber composition (vulcanized rubber composition), a product (70°C tan $\delta \times$ amount of filler) of the 70°C tan $\delta$ (tan $\delta$ at 70°C) and the amount of the filler (the amount [parts by mass] of the filler per 100 parts by mass of the rubber component) is preferably more than 3.0.

The product of (70°C tan $\delta \times$ amount of filler) is more preferably more than 3.5, still more preferably more than 4.0. The upper limit of the product of (70°C tan $\delta \times$ amount of filler) is preferably less than 10.0, more preferably less than 9.5, still more preferably less than 9.0. When the product is within the range indicated above, the advantageous effects tend to be better achieved.

In the rubber composition (vulcanized rubber composition), a ratio (Hs/70°C tan $\delta$) of the hardness Hs to the 70°C tan $\delta$ (tan $\delta$ at 70°C) is preferably less than 200.

The ratio (Hs/70°C tan $\delta$) is more preferably less than 199, still more preferably less than 198, further preferably less than 197. The lower limit of the ratio (Hs/70°C tan $\delta$) is preferably more than 100, more preferably more than 130, still more preferably more than 150, further preferably more than 170. When the ratio is within the range indicated above, the advantageous effects tend to be better achieved.

In the rubber composition (vulcanized rubber composition), a product (Hs $\times$ 24M4DBP) of the hardness Hs and the 24M4DBP (the 24M4DBP oil absorption [ml/100 g] of the carbon black having a 24M4DBP oil absorption of 170 ml/100 g or more) is preferably more than 7600.

The product of (Hs $\times$ 24M4DBP) is more preferably more than 8000, still more preferably more than 10000, further preferably more than 12000, further preferably more than 15000, further preferably more than 20000, further preferably more than 21000. The upper limit of the product of (Hs $\times$ 24M4DBP) is preferably less than 50000, more preferably less than 40000, still more preferably less than 30000, further preferably less than 25000, further preferably less than 22000. When the product is within the range indicated above, the advantageous effects tend to be better achieved.

The mechanism of the enhancement of the advantageous effects provided by a product of (Hs $\times$ 24M4DBP) that is more than a predetermined value, in particular, more than 7600, is not clear. Presumably, a high hardness increases the rigidity. Additionally, when the carbon black having a 24M4DBP oil absorption of 170 ml/100 g or more is a high structure carbon black with a high 24M4DBP oil absorption, the carbon black is likely to interact with the rubber component. Thus, cracks are less likely to occur and, even if cracks occur, the self-repairing properties of the vulcanized rubber composition may increase, presumably thereby further improving the crack growth resistance.

The rubber part (tire component) in which the rubber composition is used is not limited. Examples include a tread, a sidewall, a wing, a base tread, an undertread, a bead apex, a clinch, and an innerliner.

A tire that includes a rubber part including the rubber composition is also one embodiment of the present invention.

To better achieve the advantageous effect, the rubber composition is desirably for use in an innerliner among tire components. In this case, the rubber composition is used as an innerliner rubber composition.

The tire is produced using the rubber composition by usual methods. Specifically, the composition containing necessary additives before crosslinking or vulcanization is extruded and processed into the shape of a tire component such as a tire surface component and then molded on a tire building machine by usual methods. The resulting tire component is assembled with other tire components to produce an unvulcanized tire. Then, the unvulcanized tire is heated and pressurized in a vulcanizer, whereby a tire can be produced.

Non-limiting examples of the tire include pneumatic tires, solid tires, and airless tires. Pneumatic tires are preferred among these.

The tire is suitably used as a passenger car tire, a large passenger car tire, a large SUV tire, a truck or bus tire, a motorcycle tire, a racing tire, a winter tire (studless tire, snow tire, studded tire), an all-season tire, a run-flat tire, an aircraft tire, a mining vehicle tire, or other tires.

In the tire, a ratio (24M4DBP/Tc) of the 24M4DBP (the 24M4DBP oil absorption [ml/100 g] of the carbon black having a 24M4DBP oil absorption of 170 ml/100 g or more contained in the rubber composition) to the thickness Tc [mm] of

the rubber part is preferably more than 68.

The ratio (24M4DBP/Tc) is more preferably more than 100, still more preferably more than 150, further preferably more than 190. The upper limit of the ratio (24M4DBP/Tc) is preferably less than 500, more preferably less than 400, still more preferably less than 300, further preferably less than 250. When the ratio is within the range indicated above, the advantageous effects tend to be better achieved.

The mechanism of the enhancement of the advantageous effects provided by a ratio (24M4DBP/Tc) that is more than a predetermined value, in particular, more than 68, is not clear. Presumably, when the carbon black having a 24M4DBP oil absorption of 170 ml/100 g or more is a high structure carbon black with a high 24M4DBP oil absorption, the carbon black interacts more with the rubber component. Additionally, reducing the thickness of the rubber part facilitates the contact between the rubber component and the carbon black, so that the self-repairing properties may increase. Thus, presumably, the crack growth resistance is further improved.

In the tire, the ratio (24M4DBP/Ti) of the 24M4DBP (the 24M4DBP oil absorption [ml/100 g] of the carbon black having a 24M4DBP oil absorption of 170 ml/100 g or more in the innerliner rubber composition) to the thickness Ti [mm] of the innerliner is preferably more than 68.

The ratio (24M4DBP/Ti) is more preferably more than 100, still more preferably more than 150, further preferably more than 190. The upper limit of the ratio (24M4DBP/Ti) is preferably less than 500, more preferably less than 400, still more preferably less than 300, further preferably less than 250. When the ratio is within the range indicated above, the advantageous effects tend to be better achieved.

The mechanism of the enhancement of the advantageous effects provided by a ratio (24M4DBP/Ti) that is more than a predetermined value, in particular, more than 68, is not clear. Presumably, when the carbon black having a 24M4DBP oil absorption of 170 ml/100 g or more is a high structure carbon black with a high 24M4DBP oil absorption, the carbon black interacts more with the rubber component. Additionally, reducing the thickness of the innerliner facilitates the contact between the rubber component and the carbon black, so that the self-repairing properties may increase. Thus, presumably, the crack growth resistance of the innerliner is further improved.

In the tire, the thickness Tc [mm] of the rubber part is preferably 0.5 mm or more, more preferably 0.8 mm or more, still more preferably 1.0 mm or more, further preferably 2.0 mm or more, while it is preferably 10.0 mm or less, more preferably 7.0 mm or less, still more preferably 6.0 mm or less, particularly preferably 5.0 mm or less. When the thickness Tc is within the range indicated above, the advantageous effects tend to be better achieved.

The mechanism of the enhancement of the advantageous effects provided by controlling the thickness Tc of the rubber part to be within a predetermined range is not clear. Presumably, the rubber part with a thickness within the predetermined range secures the rubber strength to reliably have crack growth resistance, presumably thereby further improving the crack growth resistance.

In the tire, the thickness Ti [mm] of the innerliner is preferably 0.5 mm or more, more preferably 0.8 mm or more, still more preferably 1.0 mm or more, further preferably 1.5 mm or more, further preferably 2.0 mm or more, while it is preferably 10.0 mm or less, more preferably 7.0 mm or less, still more preferably 6.0 mm or less, further preferably 5.0 mm or less, further preferably 3.5 mm or less, further preferably 2.5 mm or less. When the thickness Ti is within the range indicated above, the advantageous effects tend to be better achieved.

The mechanism of the enhancement of the advantageous effects provided by controlling the thickness Ti of the innerliner to be within a predetermined range is not clear. Presumably, the innerliner with a thickness within the predetermined range secures the rubber strength to reliably have crack growth resistance, presumably thereby further improving the crack growth resistance.

Herein, the thickness Tc of a rubber part means the largest thickness of the rubber part. The thickness of a rubber part at a point on the surface of the rubber part is a straight line distance at the point measured along the normal of the surface of the rubber part. The thickness Tc of a rubber part means the largest thickness at each point on the surface of the rubber part.

The term "thickness Ti of an innerliner" refers to the thickness of the innerliner in the tire axis direction at a tire maximum width position in a cross-section along the tire radial direction. The thickness Ti of an innerliner means a straight line distance from the outer surface to the inner surface of the innerliner in the tire axis direction at a tire maximum width position. The term "thickness Ti of an innerliner at a tire maximum width position" refers to a thickness measured in the tire axis direction from the inner surface, in the tire axis direction, of the innerliner at a tire maximum width position.

The term "tire maximum width position" refers to a pair of positions at which the width is the largest in the tire axis direction.

Herein, the dimensions such as thickness are measured while the width between the bead portions of the tire is fixed to the normal rim width. In the measurement of each dimension, a sample is cut from the tire in the tire radial direction, and the width between the bead edges on both sides of the sample is fixed to the normal rim width.

Herein, the dimensions of the parts of the tire are measured for the tire in the normal state, unless otherwise stated.

Herein, the term "normal state" refers to a state where the tire is mounted on a normal rim (not shown), inflated to a

normal internal pressure, and under no load.

If measurement of the tire mounted on a normal rim is impossible, the dimensions and angles of the parts of the tire in a meridional cross-section of the tire are measured in a cross-section of the tire cut along a plane including the axis of rotation, in which the distance between the right and left beads corresponds to the distance between the beads in the tire mounted on a normal rim.

The term "normal rim" refers to a rim specified for each tire by the standard in a standard system including standards according to which the tire is provided, and may be, for example, "standard rim" with the applicable size listed in "JATMA YEAR BOOK" of The Japan Automobile Tyre Manufacturers Association, Inc. (JATMA), "measuring rim" listed in "Standards Manual" of The European Tyre and Rim Technical Organisation (ETRTO), or "design rim" listed in "YEAR BOOK" of The Tire and Rim Association, Inc. (TRA). Here, JATMA, ETRTO, and TRA will be referenced in that order, and if the referenced standard includes the applicable size, it will be followed. Moreover, for a tire which is not defined by any of the standards, it refers to a rim with the smallest diameter and, secondly, the narrowest width among the rims on which the tire can be mounted and can maintain the internal pressure, i.e., the rims that cause no air leakage between the rim and the tire.

The term "normal internal pressure" refers to an air pressure specified for each tire by the standard in a standard system including standards according to which the tire is provided, and may be "maximum air pressure" in JATMA, "inflation pressure" in ETRTO, or the maximum value shown in Table "TIRE LOAD LIMITS AT VARIOUS COLD INFLATION PRESSURES" in TRA. Like "normal rim", JATMA, ETRTO, and TRA will be referenced in that order, and the corresponding standard will be followed. Moreover, for a tire which is not defined by any of the standards, it refers to a normal internal pressure of 250 kPa or more for another tire size defined by any of the standards, for which the normal rim is listed as the standard rim. Here, when a plurality of normal internal pressures of 250 kPa or more are listed, it refers to the smallest one of these normal internal pressures.

In the tire, the ratio (WT/WL) of the weight WT [kg] of the tire to the maximum load capacity WL [kg] of the tire is preferably less than 0.0170.

The ratio (WT/WL) is more preferably less than 0.0160, still more preferably less than 0.0150. The lower limit of the ratio (WT/WL) is preferably more than 0.0010, more preferably more than 0.0050, still more preferably more than 0.0100. When the ratio is within the range indicated above, the advantageous effects tend to be better achieved.

Herein, the weight WT of the tire means the weight of the tire itself, excluding the weight of a rim. In the case of a tire that includes, in its inside, a component including sponge or a sealant or a sensor component, the weight of the tire includes the weight of such a component.

The term "maximum load capacity (normal load) WL of the tire" refers to a load specified for each tire by the standard in a standard system including standards according to which the tire is provided, and may be "maximum load capacity" in JATMA, "load capacity" in ETRTO, or the maximum value shown in Table "TIRE LOAD LIMITS AT VARIOUS COLD INFLATION PRESSURES" in TRA. Like "normal rim" and "normal internal pressure" described above, JATMA, ETRTO, and TRA will be referenced in that order, and the corresponding standard will be followed. Moreover, for a tire which is not defined by any of the standards, the normal load $W_L$ is calculated by the following equations.

$$V = \{(Dt/2)^2 - (Dt/2 - Ht)^2\} \times \pi \times Wt$$

$$W_L = 0.000011 \times V + 175$$

$W_L$: normal load (kg)
V: virtual volume ($mm^3$) of tire
Dt: outer diameter (mm) of tire
Ht: cross-sectional height (mm) of tire
Wt: cross-sectional width (mm) of tire

The term "cross-sectional width Wt (mm)" of the tire refers to the width of the tire in the normal state corresponding to the largest distance between the outer surfaces of the sidewalls, excluding patterns, letters, and the like on the sides of the tire, if present.

The term "outer diameter Dt (mm)" of the tire refers to the outer diameter of the tire in the normal state.

The term "cross-sectional height Ht (mm)" of the tire refers to the height in the tire radial direction in a radial cross-section of the tire. Provided that the rim diameter of the tire is R (mm), the height corresponds to a half of the difference between the outer diameter Dt of the tire and the rim diameter R. In other words, the cross-sectional height Ht can be determined by (Dt - R)/2.

In the tire, the cross sectional width Wt [mm] of the tire is preferably 260 mm or less, more preferably 255 mm or less, still more preferably 250 mm or less. The lower limit is preferably 150 mm or more, more preferably 180 mm or more,

still more preferably 200 mm or more. When the cross sectional width Wt is within the range indicated above, the advantageous effects tend to be better achieved.

An example of the tire of the present invention is described below with reference to drawings. The tire is not limited to the embodiment.

In FIG. 1, the vertical direction corresponds to the radial direction of a tire 2, the horizontal direction corresponds to the axial direction of the tire 2, and the direction perpendicular to the drawing plane corresponds to the circumferential direction of the tire 2. The tire 2 is bilaterally symmetrical. A tread 4 includes a cap layer 30 and a base layer 28.

Although FIG. 1 shows an example of a two-layer tread including the cap tread 30 and the base tread 28, the tread may be a monolayer tread or a three or more-layer tread.

In the tire 2, each sidewall 6 extends radially substantially inwardly from an edge of the tread 4.

The radially outer portion of the sidewall 6 is bonded to the tread 4. The radially inner portion of the sidewall 6 is bonded to a clinch 10. The sidewall 6 can prevent damage to a carcass 14.

In FIG. 1, each wing 8 is located between the tread 4 and the sidewall 6. The wing 8 is bonded to both the tread 4 and the sidewall 6.

Each clinch 10 is located radially substantially inwardly of the sidewall 6 and has at least one part to contact a rim.

The carcass 14 includes a carcass ply 36. Although the carcass 14 in the tire 2 includes one carcass ply 36, it may include two or more carcass plies.

In the tire 2, the carcass ply 36 extends between the bead cores 32 on opposite sides along the tread 4 and the sidewalls 6. The carcass ply 36 is folded around each bead core 32 from the inside to the outside in the axial direction. Due to the folding, the carcass ply 36 is provided with a main portion 36a and a pair of folded portions 36b. Namely, the carcass ply 36 includes the main portion 36a and a pair of the folded portions 36b.

Each bead core 32 includes a bead apex 34 radially outwardly extending from the bead core 32. The bead core 32 has a ring shape and desirably contains a wound non-stretchable wire. The bead apex 34 is radially outwardly tapered.

Though not shown, the carcass ply 36 desirably consists of a large number of parallel cords and a topping rubber. The absolute value of the angle of each cord with respect to the equator CL is suitably from 75° to 90°. In other words, the carcass 14 preferably has a radial structure.

In FIG. 1, a belt layer 16 is located radially inwardly of the tread 4. The belt layer 16 is stacked on the carcass 14. The belt layer 16 reinforces the carcass 14. In the tire 2 in FIG. 1, the belt layer 16 consists of an interior layer 38 and an exterior layer 40. As is clear from FIG. 1, the interior layer 38 is desirably slightly wider in the axial direction than the exterior layer 40. In the tire 2, the axial width of the belt layer 16 is preferably at least 0.6 times but preferably not more than 0.9 times the cross-sectional width of the tire 2.

The interior layer 38 and the exterior layer 40 each desirably include a parallel array of single-strand steel cords (steel monofilaments) and a topping rubber (coating rubber). In other words, the belt layer 16 contains a parallel array of steel monofilaments.

In FIG. 1, the band 18 is located radially outwardly of the belt layer 16. The band 18 has an axial width that is equal to that of the belt layer 16. The band 18 may have a larger width than the belt layer 16.

Though not shown, the band 18 desirably consists of a cord and a topping rubber. The cord is spirally wound. This band 18 has what is called a jointless structure. The cord extends substantially in the circumferential direction. The angle of the cord with respect to the circumferential direction is preferably 5° or smaller or even 2° or smaller. The cord restricts the belt layer 16, thereby inhibiting lifting of the belt layer 16.

The belt layer 16 and the band 18 in FIG. 1 constitute a reinforcing layer. The reinforcing layer may consist only of the belt layer 16.

FIG. 2 is an enlarged view showing the tread 4 and its vicinity in FIG. 1.

The tire in FIG. 2 is a tire 2 having a groove 26 on the tire equator (on CL).

An innerliner 20 is located inwardly of the carcass 14. The innerliner 20 is bonded to the inner surface of the carcass 14. The innerliner 20 maintains the inner pressure of the tire 20.

The innerliner 20 in the tire 2 includes a rubber composition that contains a rubber component including a butyl-based rubber, a cyclic amine with a double bond in its ring, and a carbon black having a 24M4DBP oil absorption of 170 ml/100 g or more.

Each chafer 22 is located near the bead 12. In this embodiment, the chafer 22 desirably consists of a rubber and a fabric impregnated with the rubber. The chafer 22 may be integrated with the clinch 10.

In the tire 2, the tread 4 has main grooves 42 as grooves 26. As shown in FIG. 1, the tread 4 has a plurality of, specifically three, main grooves 42 engraved thereon. The main grooves 42 are spaced apart in the axis direction. Four ribs 44 extending in the circumferential direction are defined by the three main grooves 42 engraved on the tread 4. In other words, each main groove 42 is between one rib 44 and another rib 44.

The main grooves 42 extend in the circumferential direction. The main grooves 42 are continuous in the circumferential direction without interruption. The main grooves 42 promote draining of water present between the road surface and the tire 2, for example, in rainy weather. Thus, the tire 2 can sufficiently contact the road surface even when the

road surface is wet.

The tire 2 in FIG. 1 has a tire maximum width position M on the surface of the sidewall 6.

Desirably, the 24M4DBP oil absorption (24M4DBP) of the carbon black having a 24M4DBP oil absorption of 170 ml/100 g or more included in the innerliner 20, the thickness Ti of the innerliner in the tire axis direction at the tire maximum width position M, the weight WT of the tire, and the maximum load capacity WL of the tire give 24M4DBP/Ti, 24M4DBP, Ti, WT/WL, WT, and WL which are within the respective ranges indicated above.

## EXAMPLES

Examples (working examples) which are considered preferable to implement the present invention are described below although the scope of the invention is not limited to the examples.

Chemicals used in tire production are listed below. If necessary, the chemicals are purified by usual techniques.

Halogenated butyl rubber: Bromobutyl rubber 2255 (brominated butyl rubber) available from Exxon Mobil
Carbon black 1: SHOBLACK N220 (24M4DBP: 98 ml/100 g, $N_2SA$: 115 $m^2/g$) available from Cabot Japan K.K.
Carbon black 2: Printex XE2B (24M4DBP: 420 ml/100 g) available from Orion Engineered Carbons
Stearic acid: stearic acid "TSUBAKI" available from NOF Corporation
1-Butylimidazole: a product of Tokyo Chemical Industry Co., Ltd.
1-Methylimidazole: a product of Tokyo Chemical Industry Co., Ltd.
1-Nonylimidazole: a product of Tokyo Chemical Industry Co., Ltd.
4-Dimethylaminopyridine: a product of Tokyo Chemical Industry Co., Ltd.
Zinc oxide: zinc oxide available from Mitsui Mining & Smelting Co., Ltd.
Sulfur: HK-200-5 (5% oil-containing powdered sulfur) available from Hosoi Chemical Industry Co., Ltd.
Vulcanization accelerator 1: NOCCELER M (2-mercaptobenzothiazole) available from Ouchi Shinko Chemical Industrial Co., Ltd.
Vulcanization accelerator 2: NOCCELER DM (di-2-benzothiazolyl disulfide) available from Ouchi Shinko Chemical Industrial Co., Ltd.

<Production of rubber composition and rubber sheet>

According to the formulation in Table 1, materials other than the sulfur and the vulcanization accelerators are kneaded in a 1.7 L Banbury mixer (Kobe Steel, Ltd.) at 150°C for five minutes to obtain a kneaded product.

The sulfur and the vulcanization accelerators are added to the kneaded product, and they are kneaded using an open roll mill at 80°C for five minutes to obtain an unvulcanized rubber composition.

The unvulcanized rubber composition is press-vulcanized at 170°C for 12 minutes, whereby a vulcanized rubber sheet is obtained.

<Production of test tire>

According to the specification in Table 1, the unvulcanized rubber composition is formed into the shape of an innerliner and is then assembled with other tire components on a tire building machine to build an unvulcanized tire. The unvulcanized tire is vulcanized at 170°C for 10 minutes, whereby a test tire (size 215/45R17 (outer diameter Dt: 624 mm, inner diameter r: 430 mm, cross sectional width Wt: 215 mm, maximum load capacity WL: 480 kg), weight WT of tire: 6.2 kg, thickness Ti of innerliner: 2.0 mm, a passenger car tire, FIGs. 1 and 2) is produced.

Vulcanized rubber sheets and test tires including rubber compositions prepared according to the amounts and the specifications varied as shown in Table 1 are simulated. Table 1 shows the results calculated as described in the evaluation methods below.

<Hs>

A test specimen is cut out from the innerliner of the test tire. The Hs of the test specimen is measured in accordance with JIS K 6253-3 (2012) "Rubber, vulcanized or thermoplastic -Determination of hardness- Part 3: Durometer method" using a type A durometer. The measurement is conducted at 25°C.

<Hardness index>

The Hs measured by the above method is expressed as an index (hardness index) relative to the Hs in Reference Comparative Example (Comparative Example 3) taken as 100. A higher index indicates better hardness.

<Viscosity measurement>

The loss tangent (tan δ) is measured as stipulated in JIS K 6394 using a viscoelastic spectrometer ("EPLEXOR series" available from GABO) under conditions including an initial strain of 10%, a dynamic strain of 1%, a frequency of 10 Hz, a temperature of 70°C, and an extension mode. A test specimen having a length of 20 mm, a width of 4 mm, and a thickness of 1 mm is collected from the innerliner of the test tire. The collection of the test specimen is performed while the length direction and the thickness direction of the test specimen are adjusted to the circumferential direction and the radial direction of the tire, respectively.

<Crack growth resistance test>

A test specimen having a length of 100 mm, a width of 50 mm, and a thickness of 2.0 mm is collected from the vulcanized rubber sheet. An initial 5.0 mm cut is made from both sides at a center in the length direction. The sample with the initial cut is bent at a strain of 40% with a De Mattia type tester, and the number of times of bending until breakage is measured. The measured number is indicated as an index (crack growth resistance index A) relative to the number of bending until breakage in Reference Comparative Example (Comparative Example 3) taken as 100. A higher index A indicates better crack growth resistance.

<Overall performance>

Overall performance in terms of hardness and crack growth resistance is evaluated based on the sum of the hardness index and the crack growth resistance index A. A larger sum indicates better overall performance.

[Table 1]

| | | Example | | | | | Comparative Example | | |
|---|---|---|---|---|---|---|---|---|---|
| | | 1 | 2 | 3 | 4 | 5 | 1 | 2 | 3 |
| Formulation (parts by mass) | Halogenated butyl rubber | 100 | 100 | 100 | 100 | 100 | 100 | 100 | 100 |
| | Carbon black 1 | | | | | | | 40 | 40 |
| | Carbon black 2 | 10 | 10 | 15 | 10 | 5 | 10 | | |
| | Stearic acid | 2 | 2 | 2 | 2 | 2 | 2 | 2 | 2 |
| | 1-Butylimidazole | 4 | | | | | | | 4 |
| | 1-Methylimidazole | | 4 | | | | | | |
| | 1-Nonylimidazole | | | 4 | | 6 | | | |
| | 4-Dimethylaminopyridine | | | | 4 | | | | |
| | Zinc oxide | 2 | 2 | 2 | 2 | 2 | 2 | 2 | 2 |
| | Sulfur | 0.5 | 0.5 | 0.5 | 0.5 | 0.5 | 0.5 | 0.5 | 0.5 |
| | Vulcanization accelerator 1 | 0.5 | 0.5 | 0.5 | 0.5 | 0.5 | 0.5 | 0.5 | 0.5 |
| | Vulcanization accelerator 2 | 0.8 | 0.8 | 0.8 | 0.8 | 0.8 | 0.8 | 0.8 | 0.8 |
| Specification/ Physical properties | Hardness Hs | 52 | 55 | 53 | 55 | 43 | 49 | 49 | 52 |
| | 70°C tan δ | 0.27 | 0.25 | 0.27 | 0.23 | 0.23 | 0.22 | 0.24 | 0.26 |
| | 70°C tan δ × Amount of filler | 2.7 | 2.5 | 4.1 | 2.3 | 1.2 | 2.2 | 9.6 | 10.4 |
| | Hs/70°C tan δ | 193 | 220 | 196 | 239 | 187 | 223 | 204 | 200 |
| | Hs × 24M4DBP | 20800 | 22000 | 21200 | 22000 | 17200 | 19600 | 4802 | 5096 |
| | 24M4DBP/Ti | 200 | 200 | 200 | 200 | 200 | 200 | 49 | 49 |
| Evaluation | Hardness index | 100 | 106 | 102 | 106 | 83 | 94 | 94 | 100 |
| | Crack growth resistance index A | 148 | 124 | 160 | 116 | 180 | 40 | 40 | 100 |
| | Overall performance | 248 | 230 | 262 | 222 | 263 | 134 | 134 | 200 |

REFERENCE SIGNS LIST

| | |
|---|---|
| 2 | tire |
| 4 | tread |
| 6 | sidewall |
| 8 | wing |
| 10 | clinch |
| 12 | bead |
| 14 | carcass |
| 16 | belt layer |
| 18 | band |
| 20 | innerliner |
| 22 | chafer |
| 24 | tread surface |

26 groove
28 base layer
30 cap layer
32 bead core
34 bead apex
36 carcass ply
36a main portion
36b folded portion
38 interior layer
40 exterior layer
42 main groove
44 rib
CL tire equator
M tire maximum width position
Ti thickness of innerliner at tire maximum width position

**Claims**

**1.** A rubber composition, comprising:

a rubber component including a butyl-based rubber;
a cyclic amine with a double bond in its ring; and
a carbon black having a 24M4DBP oil absorption of 170 ml/100 g or more.

**2.** The rubber composition according to claim 1,
wherein the rubber composition has a hardness Hs of more than 45.

**3.** The rubber composition according to claim 1 or 2,
wherein the rubber composition contains a filler in an amount of less than 40 parts by mass per 100 parts by mass of the rubber component.

**4.** The rubber composition according to any one of claims 1 to 3,
wherein a product (70°C tan $\delta \times$ amount of filler) of a tan $\delta$ at 70°C (70°C tan $\delta$) and the amount [parts by mass] of the filler per 100 parts by mass of the rubber component (amount of filler) is more than 3.0.

**5.** The rubber composition according to any one of claims 1 to 4,
wherein a ratio (Hs/70°C tan $\delta$) of the hardness Hs to the tan $\delta$ at 70°C is less than 200.

**6.** The rubber composition according to any one of claims 1 to 5,
wherein a product (Hs $\times$ 24M4DBP) of the hardness Hs and the 24M4DBP oil absorption [ml/100 g] (24M4DBP) of the carbon black having a 24M4DBP oil absorption of 170 ml/100 g or more is more than 7600.

**7.** A tire, comprising a rubber part including the rubber composition according to any one of claims 1 to 6.

**8.** The tire according to claim 7,
wherein a ratio (24M4DBP/Tc) of the 24M4DBP oil absorption [ml/100 g] (24M4DBP) of the carbon black having a 24M4DBP oil absorption of 170 ml/100 g or more contained in the rubber composition constituting the rubber part to a thickness Tc [mm] of the rubber part is more than 68.

**9.** The tire according to claim 7 or 8,
wherein a ratio (WT/WL) of a weight WT [kg] of the tire to a maximum load capacity WL [kg] of the tire is less than 0.0170.

**10.** The tire according to any one of claims 7 to 9,
wherein the ratio (WT/WL) of a weight WT [kg] of the tire to a maximum load capacity WL [kg] of the tire is less than 0.0150.

**11.** The tire according to any one of claims 7 to 10,

wherein the ratio (WT/WL) of a weight WT [kg] of the tire to a maximum load capacity WL [kg] of the tire is less than 0.0130.

**12.** The tire according to any one of claims 7 to 11, wherein the rubber part is an innerliner.

**13.** The tire according to any one of claims 7 to 12,

wherein the rubber part is an innerliner, and
the innerliner has a thickness Ti [mm] of 1.5 to 2.5 mm.

**14.** The tire according to any one of claims 7 to 13, wherein the tire has a cross sectional width Wt [mm] of 250 mm or less.

FIG.1

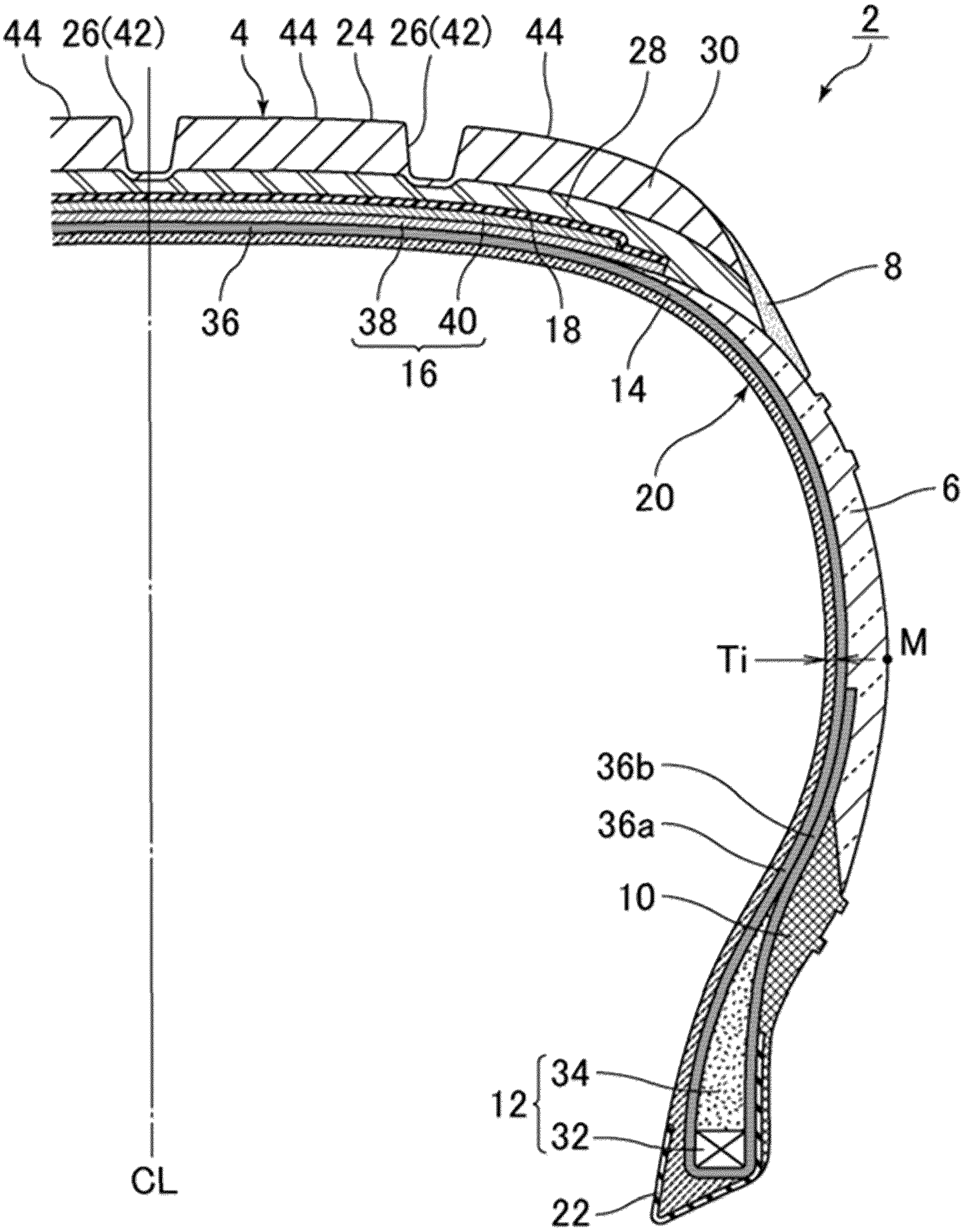
44
26(42)
4
44
24
26(42)
44
28
30
2
8
36
38
40
16
18
14
20
6
Ti
M
36b
36a
10
12
34
32
22
CL

FIG.2

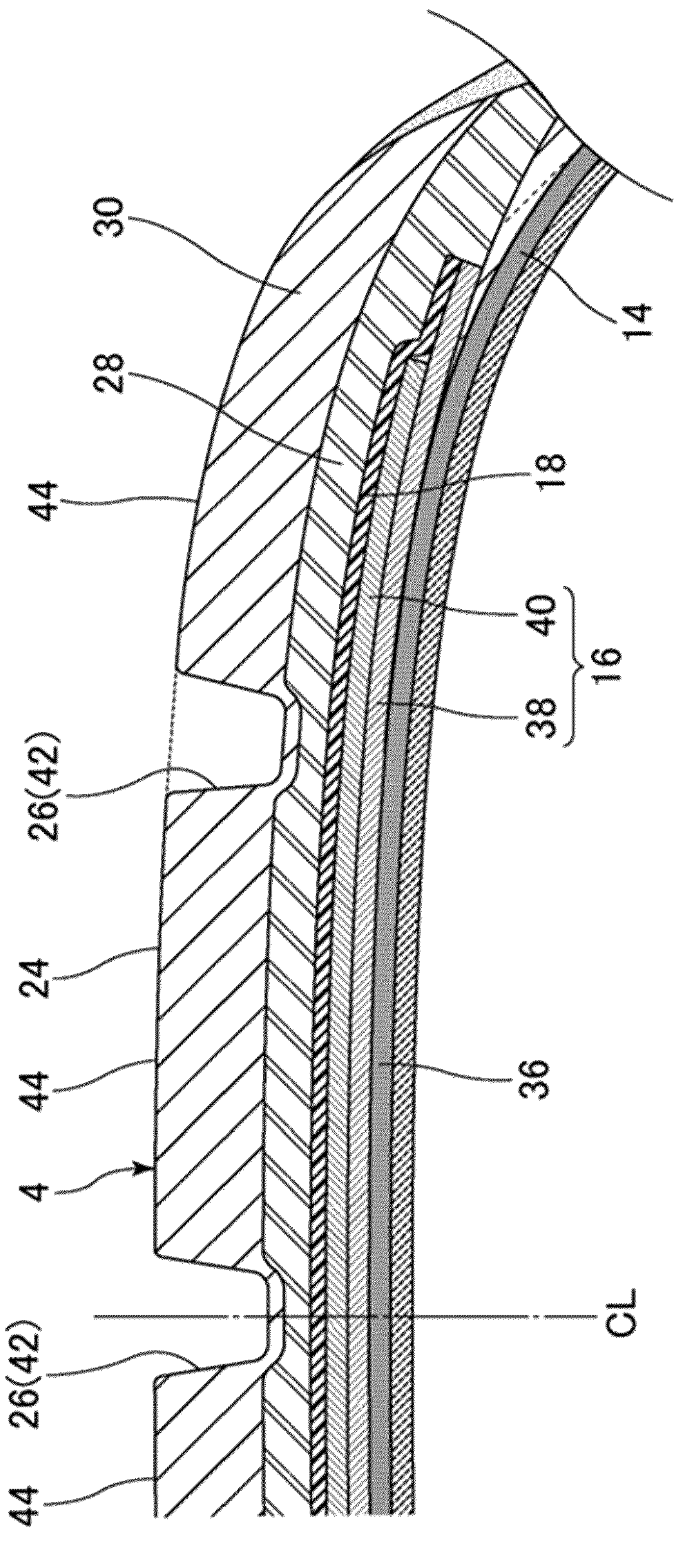

Europäisches Patentamt
European Patent Office
Office européen des brevets

# EUROPEAN SEARCH REPORT

Application Number
EP 25 18 7773

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 107 057 136 A (CHENGDU WEISHANG TECH CO LTD) 18 August 2017 (2017-08-18)<br>* examples 1-9 *<br>----- | 1-14 | INV.<br>C08K3/04<br>C08L23/283 |
| A | EP 1 969 016 B1 (EXXONMOBIL CHEM PATENTS INC [US]) 28 April 2010 (2010-04-28)<br>* expt 3 table 4 *<br>----- | 1-14 | |
| A | MARCUS SUCKOW ET AL: "Tuning the Properties and Self-Healing Behavior of Ionically Modified Poly(isobutylene- co -isoprene) Rubber",<br>MACROMOLECULES,<br>vol. 51, no. 2,<br>29 December 2017 (2017-12-29), pages 468-479, XP055626964,<br>US<br>ISSN: 0024-9297, DOI: 10.1021/acs.macromol.7b02287<br>* the whole document *<br>----- | 1-14 | |

| TECHNICAL FIELDS SEARCHED (IPC) |
|---|
| C08K |
| C08L |

The present search report has been drawn up for all claims

1

| Place of search | Date of completion of the search | Examiner |
|---|---|---|
| Munich | 12 December 2025 | Ritter, Nicola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 25 18 7773

This annex lists the patent family members relating to the patent documents cited in the above-mentioned European search report. The members are as contained in the European Patent Office EDP file on
The European Patent Office is in no way liable for these particulars which are merely given for the purpose of information.

12-12-2025

| Patent document cited in search report | Publication date | Patent family member(s) | Publication date |
|---|---|---|---|
| CN 107057136 A | 18-08-2017 | NONE | |
| EP 1969016 B1 | 28-04-2010 | AT E466032 T1 | 15-05-2010 |
| | | CA 2632734 A1 | 21-06-2007 |
| | | CN 101326199 A | 17-12-2008 |
| | | EP 1969016 A1 | 17-09-2008 |
| | | JP 5690471 B2 | 25-03-2015 |
| | | JP 2009520050 A | 21-05-2009 |
| | | US 2008281021 A1 | 13-11-2008 |
| | | WO 2007070063 A1 | 21-06-2007 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019065240 A
- JP 2009002594 A


### Non-patent literature cited in the description


- *Akita Prefectural University Web Journal B*, 2019, vol. 6, 216-222
- Rubber, vulcanized or thermoplastic -Determination of hardness- Part 3: Durometer method. *JIS K 6253-3*, 2012